# EUROPEAN PATENT APPLICATION

(11) **EP 4 582 904 A1**
(43) Date of publication of application: **09.07.2025**
(21) Application number: 23870872.1
(22) Date of filing: 26.09.2023
(51) Int. Cl.: G06F 1/3234, G06F 1/3287, G06F 3/04817, G06F 3/16

(54) **PROCESSING METHOD AND RELATED APPARATUS**

(30) Priority: 30.09.2022 CN 202211214665
(71) Applicant: Huawei Technologies Co., Ltd., Shenzhen, Guangdong 518129 (CN)
(72) Inventor: TAN, Yang, Shenzhen, Guangdong 518129 (CN); ZHANG, Bo, Shenzhen, Guangdong 518129 (CN); FANG, Shuailei, Shenzhen, Guangdong 518129 (CN)
(74) Representative: Gill Jennings & Every LLP
(86) International application number: PCT/CN2023/121776
(87) International publication number: WO 2024/067645

(57) **Abstract**

This application discloses a processing method and a related apparatus. An electronic device includes an application processor and a microcontroller unit. Runtime power consumption of the microcontroller unit is lower than runtime power consumption of the application processor. When playing a first audio, the electronic device may determine whether the microcontroller unit supports playing of the first audio, and when determining that the microcontroller unit supports playing of the first audio, play data of the first audio through the microcontroller unit. When determining that the microcontroller unit does not support playing of the first audio, the electronic device may decode the first audio through the application processor, to obtain first data. The application processor may send the first data to the microcontroller unit. The microcontroller unit controls a speaker to play the first data. In this way, the electronic device plays an audio through the microcontroller unit, to reduce power consumption of playing the audio by the electronic device. In addition, the application processor may switch to a sleep state when the microcontroller unit controls the speaker to play a sound, to further reduce power consumption.

## Description

This application claims priority to Chinese Patent Application No. 202211214665.3, filed with the China National Intellectual Property Administration on September 30, 2022 and entitled "PROCESSING METHOD AND RELATED APPARATUS", which is incorporated herein by reference in its entirety.

### TECHNICAL FIELD

This application relates to the field of terminal technologies, and in particular, to a processing method and a related apparatus.

### BACKGROUND

With the development of science and technologies, intelligent wearable devices become increasingly popular. When the intelligent wearable device plays an audio, because the intelligent wearable device needs to process audio data through an application processor, the application processor is in a wake-up state for a long time, and running power consumption is high. Therefore, how to reduce power consumption of the intelligent wearable device and prolong a standby time of the intelligent wearable device becomes a problem to be urgently resolved.

### SUMMARY

This application provides a processing method and a related apparatus, so that an audio is played through a microcontroller unit, to reduce power consumption of an electronic device.

According to a first aspect, this application provides a processing method, applied to an electronic device, where the electronic device includes an application processor, a microcontroller unit, and a speaker, and the method includes:
The application processor receives a first input, where the first input is used to trigger the electronic device to play a first audio by using a first application.

The application processor sends a first message to the microcontroller unit in response to the first input.

When the microcontroller unit determines, based on the first message, that the microcontroller unit supports playing of the first audio, the microcontroller unit sends a second message to the application processor.

The microcontroller unit controls the speaker to play the first audio, and the application processor switches to a sleep state, after the microcontroller unit sends the second message to the application processor.

In this way, the microcontroller unit plays the first audio, and power consumption of the electronic device is reduced. In addition, the application processor switches to the sleep state, which may further reduce device power consumption.

In a possible implementation, the method further includes:
When the microcontroller unit determines, based on the first message, that the microcontroller unit does not support playing of the first audio, the microcontroller unit sends a third message to the application processor.

The application processor decodes the first audio in response to the third message, to obtain the first data.

The application processor sends the first data to the microcontroller unit.

The microcontroller unit controls the speaker to play the first data.

In this way, when playing of the first audio is not supported, the microcontroller unit may obtain, through the application processor, the first data obtained through decoding, and play the first data.

In a possible implementation, the first message includes a first audio format of the first audio, and that the microcontroller unit determines, based on the first message, that the microcontroller unit supports playing of the first audio specifically includes:
When determining, based on the first audio format, that the microcontroller unit supports decoding of the first audio in the first audio format, the microcontroller unit determines that the microcontroller unit supports playing of the first audio.

In this way, the microcontroller unit may determine, based on the audio format of the first audio, whether playing of the audio is supported.

In a possible implementation, that the microcontroller unit controls the speaker to play the first audio, and the application processor switches to a sleep state, after the microcontroller unit sends the second message to the application processor specifically includes:
The application processor sends the first audio to the microcontroller unit in response to the second message, where the second message indicates that the microcontroller unit supports decoding of the first audio.

After receiving the first audio, the microcontroller unit decodes the first audio to obtain the first data.

The microcontroller unit controls the speaker to play the first data.

After completing sending of the first audio, the application processor switches to the sleep state.

In this way, when supporting decoding of the first audio, the microcontroller unit may obtain the first audio from the application processor, and play the first audio. After sending the first audio to the microcontroller unit, the application processor may enter the sleep state, to reduce power consumption.

In a possible implementation, the first message includes an identifier of the first audio, and that the microcontroller unit determines, based on the first message, that the microcontroller unit supports playing of the first audio specifically includes:
When determining, based on the identifier of the first audio, that a second audio corresponding to the identifier of the first audio is stored, the microcontroller unit determines that the microcontroller unit supports playing of the first audio.

In this way, because the microcontroller unit stores an audio decoded by the application processor, when the microcontroller unit plays the audio again, stored audio data may be directly played without the application processor performing decoding again, to save computing resources of the application processor and reduce device power consumption.

In a possible implementation, the second audio includes the first data obtained through decoding, and that the microcontroller unit controls the speaker to play the first audio specifically includes:
The microcontroller unit controls the speaker to play the second audio indicated by the identifier of the first audio.

In a possible implementation, the second audio includes the first data encoded in a second audio format, the microcontroller unit supports decoding of the second audio in the second audio format, and that the microcontroller unit controls the speaker to play the first audio specifically includes:
The microcontroller unit decodes the second audio indicated by the identifier of the first audio, to obtain the first data.

The microcontroller unit controls the speaker to play the first data.

In this way, the microcontroller unit uses an audio format supported by the microcontroller unit to encode audio data obtained by the application processor through decoding, which can save storage space of the microcontroller unit.

In a possible implementation, after the microcontroller unit sends the second message to the application processor, the method further includes:
After receiving the second message, the application processor sends, to the microcontroller unit, a fourth message indicating the microcontroller unit to play the first audio.

After receiving the fourth message, the microcontroller unit controls the speaker to play the first audio.

In this way, after receiving a feedback from the microcontroller unit, the application processor may notify, based on information that is for supporting playing of the first audio and that is fed back by the microcontroller unit, the microcontroller unit to play the first audio.

In a possible implementation, after the microcontroller unit receives the fourth message, the method further includes:
The microcontroller unit sends a fifth message to the application processor, where the fifth message indicates the application processor to switch to the sleep state.

That the application processor switches to the sleep state specifically includes:
The application processor switches to the sleep state in response to the fifth message.

In this way, the application processor may switch to the sleep state only when determining that the microcontroller unit plays the first audio.

In a possible implementation, when the microcontroller unit controls the speaker to play an audio, the method further includes:
The application processor detects a first request of a second application, where the first request is used to request use of the speaker.

The application processor sends a sixth message to the microcontroller unit, where the sixth message indicates the microcontroller unit to stop playing the audio.

In a possible implementation, a priority of the second application is higher than a priority of the first application.

In this way, the application processor may ensure that an application with a high priority preferentially uses the speaker.

In a possible implementation, in a process of playing the audio by the microcontroller unit, the method further includes:
The application processor receives an input for volume adjustment, and sets a volume value of the application processor to an adjusted volume value.

The application processor sends the adjusted volume value to the microcontroller unit.

The microcontroller unit sets a volume value of the microcontroller unit to the adjusted volume value.

In this way, after receiving the input for volume adjustment, the application processor may synchronize a volume of the application processor with a volume of the microcontroller unit.

In a possible implementation, when the electronic device is in a state of continuously playing audios and the microcontroller unit determines, based on the first message, that the microcontroller unit supports playing of the first audio, the method further includes:
After completing playing of the first audio, the microcontroller unit notifies the application processor to switch to a non-sleep state.

After switching to the non-sleep state, the application processor sends a seventh message to the microcontroller unit, where the first audio and a third audio belong to a same playlist.

The microcontroller unit determines, based on the seventh message, whether the microcontroller unit supports playing of the third audio.

In this way, when the electronic device continuously plays a plurality of audios, after the microcontroller unit completes playing of the first audio, the application processor may query the microcontroller unit whether the microcontroller unit supports playing of the third audio.

According to a second aspect, this application provides another processing method, applied to an electronic device, where the electronic device includes an application processor, a microcontroller unit, and a speaker, and the method includes:
The microcontroller unit receives a first input, where the first input is used to trigger the electronic device to play a first audio by using a first application.

The microcontroller unit determines, in response to the first input based on first information of the first audio, whether the microcontroller unit supports playing of the first audio.

When the microcontroller unit determines, based on the first information, that the microcontroller unit supports playing of the first audio, the microcontroller unit controls the speaker to play the first audio.

In this way, the microcontroller unit may replace the application processor to run the first application, to reduce device power consumption. The microcontroller unit may further play the first audio, to further reduce device power consumption.

In a possible implementation, before the microcontroller unit receives the first input, the method further includes:
The application processor controls a display to display a first interface, where the first interface includes an icon of the first application.

The application processor receives a second input for the icon of the first application.

The application processor sends a first instruction to the microcontroller unit in response to the second input, where the first instruction instructs the microcontroller unit to display an interface of the first application.

After sending the first instruction, the application processor switches to a sleep state.

The microcontroller unit controls, in response to the first instruction, the display to display the interface of the first application, where the interface of the first application includes a first control, the first control is used to trigger the electronic device to play the first audio, and the first input is an input for the first control.

In this way, when determining that the first application is run by the microcontroller unit, the application processor may notify the microcontroller unit to display the interface of the first application, to reduce device power consumption.

In a possible implementation, the method further includes:
When the microcontroller unit determines, based on the first information, that the microcontroller unit does not support playing of the first audio, the microcontroller unit sends a first message to the application processor.

The application processor decodes the first audio in response to the first message, to obtain the first data.

The application processor sends the first data to the microcontroller unit.

The microcontroller unit controls the speaker to play the first data.

In this way, when playing of the first audio is not supported, the microcontroller unit may obtain, through the application processor, the first data obtained through decoding, and play the first data.

In a possible implementation, a third message includes the first audio.

In a possible implementation, the first message is used to trigger the application processor to switch to a non-sleep state.

In this way, after receiving the third message for decoding the first audio, the application processor may switch to the non-sleep state to decode the first audio.

In a possible implementation, the first information includes a first audio format of the first audio, and that the microcontroller unit determines, based on the first information, that the microcontroller unit supports playing of the first audio specifically includes:
When determining, based on the first audio format, that the microcontroller unit supports decoding of the first audio in the first audio format, the microcontroller unit determines that the microcontroller unit supports playing of the first audio.

In this way, the microcontroller unit may determine, based on the audio format of the first audio, whether playing of the audio is supported.

In a possible implementation, that the microcontroller unit controls the speaker to play the first data specifically includes:
The microcontroller unit decodes the first audio to obtain the first data.

The microcontroller unit controls the speaker to play the first data.

In a possible implementation, the first information includes an identifier of the first audio, and that the microcontroller unit determines, based on the first information, that the microcontroller unit supports playing of the first audio specifically includes:
When determining, based on the identifier of the first audio, that a second audio corresponding to the identifier of the first audio is stored, the microcontroller unit determines that the microcontroller unit supports playing of the first audio.

In this way, because the microcontroller unit stores an audio decoded by the application processor, when the microcontroller unit plays the audio again, stored audio data may be directly played without the application processor performing decoding again, to save computing resources of the application processor and reduce device power consumption.

In a possible implementation, the second audio includes the first data obtained through decoding, and that the microcontroller unit controls the speaker to play the first audio specifically includes:
The microcontroller unit controls the speaker to play the second audio indicated by the identifier of the first audio.

In a possible implementation, the second audio includes the first data encoded in a second audio format, the microcontroller unit supports decoding of the second audio in the second audio format, and that the microcontroller unit controls the speaker to play the first audio specifically includes:
The microcontroller unit decodes the second audio indicated by the identifier of the first audio, to obtain the first data.

The microcontroller unit controls the speaker to play the first data.

In this way, the microcontroller unit uses an audio format supported by the microcontroller unit to encode audio data obtained by the application processor through decoding, which can save storage space of the microcontroller unit.

In a possible implementation, when the microcontroller unit controls the speaker to play an audio, the method further includes:
The application processor detects a first request of a second application, where the first request is used to request use of the speaker.

The application processor sends a sixth message to the microcontroller unit, where the sixth message indicates the microcontroller unit to stop playing the audio.

In a possible implementation, a priority of the second application is higher than a priority of the first application.

In this way, the application processor may ensure that an application with a high priority preferentially uses the speaker.

In a possible implementation, in a process of playing the audio by the microcontroller unit, the method further includes:
The application processor receives an input for volume adjustment, and sets a volume value of the application processor to an adjusted volume value.

The application processor sends the adjusted volume value to the microcontroller unit.

The microcontroller unit sets a volume value of the microcontroller unit to the adjusted volume value.

In this way, after receiving the input for volume adjustment, the application processor may synchronize a volume of the application processor with a volume of the microcontroller unit.

In a possible implementation, the electronic device is in a state of continuously playing audios and the microcontroller unit determines, based on the first information, that the microcontroller unit supports playing of the first audio; and the method further includes:
After the microcontroller unit completes playing of the first audio, if the microcontroller unit determines, based on second information of a third audio, that playing of the third audio is not supported, the microcontroller unit notifies the application processor to switch to the non-sleep state, and sends the third audio to the application processor.

After switching to the non-sleep state, the application processor decodes the third audio.

In this way, when the electronic device continuously plays a plurality of audios, the microcontroller unit may wake up and notify the application processor to decode an audio when playing the audio whose playing is not supported.

According to a third aspect, this application provides another processing method, including:
A first electronic device receives a first input, where the first input is used to trigger the electronic device to play a first audio by using a first application.

The first electronic device sends a first message to a second electronic device in response to the first input, where the first message indicates the second electronic device to determine whether the second electronic device supports playing of the first audio.

The first electronic device switches to a sleep state after receiving a second message sent by the second electronic device.

In a possible implementation, the method further includes:
An application processor receives a third message sent by a microcontroller unit, where the third message indicates the second electronic device to decode the first audio.

The first electronic device decodes the first audio in response to the third message, to obtain first data.

The application processor sends the first data to the microcontroller unit.

In a possible implementation, that the first electronic device switches to a sleep state after receiving a second message sent by the second electronic device specifically includes:
The application processor sends the first audio to the microcontroller unit in response to the second message, where the second message indicates that the microcontroller unit supports decoding of the first audio.

After completing sending of the first audio, the application processor switches to the sleep state.

In a possible implementation, after the application processor receives the second message, the method further includes:
The application processor sends, to the microcontroller unit, a fourth message indicating the microcontroller unit to play the first audio.

In a possible implementation, that the application processor switches to the sleep state specifically includes:
The application processor receives a fifth message sent by the microcontroller unit, and switches to the sleep state, where the fifth message indicates the application processor to switch to the sleep state.

In a possible implementation, the method further includes:
The application processor detects a first request of a second application when the microcontroller unit controls a speaker to play an audio, where the first request is used to request use of the speaker.

The application processor sends a sixth message to the microcontroller unit, where the sixth message indicates the microcontroller unit to stop playing the audio.

In a possible implementation, a priority of the second application is higher than a priority of the first application.

In a possible implementation, the method further includes:
The application processor receives an input for volume adjustment in a process of playing the audio by the microcontroller unit, and sets a volume value of the application processor to an adjusted volume value.

The application processor sends the adjusted volume value to the microcontroller unit.

In a possible implementation, the method further includes:
The application processor switches to a non-sleep state after receiving a notification of switching to the non-sleep state sent by the microcontroller unit.

After switching to the non-sleep state, the application processor sends a seventh message to the microcontroller unit, where the first audio and a third audio belong to a same playlist.

According to a fourth aspect, this application provides another processing method, including:
After receiving a first message sent by a first electronic device, a second electronic device determines whether the second electronic device supports playing of a first audio.

When the second electronic device determines, based on the first message, that the second electronic device supports playing of the first audio, the second electronic device sends a second message to the first electronic device.

The second electronic device controls a speaker to play the first audio after the second electronic device sends the second message to the first electronic device.

In a possible implementation, the method further includes:
When a microcontroller unit determines, based on the first message, that the microcontroller unit does not support playing of the first audio, the microcontroller unit sends a third message to an application processor.

The microcontroller unit controls the speaker to play first data.

In a possible implementation, the first message includes a first audio format of the first audio, and that the microcontroller unit determines, based on the first message, that the microcontroller unit supports playing of the first audio specifically includes:
When determining, based on the first audio format, that the microcontroller unit supports decoding of the first audio in the first audio format, the microcontroller unit determines that the microcontroller unit supports playing of the first audio.

In a possible implementation, that the microcontroller unit controls the speaker to play the first audio after the microcontroller unit sends the second message to the application processor specifically includes:
After receiving the first audio sent by the application processor, the microcontroller unit decodes the first audio to obtain the first data.

The microcontroller unit controls the speaker to play the first data.

In a possible implementation, the first message includes an identifier of the first audio, and that the microcontroller unit determines, based on the first message, that the microcontroller unit supports playing of the first audio specifically includes:
When determining, based on the identifier of the first audio, that a second audio corresponding to the identifier of the first audio is stored, the microcontroller unit determines that the microcontroller unit supports playing of the first audio.

In a possible implementation, the second audio includes the first data obtained through decoding, and that the microcontroller unit controls the speaker to play the first audio specifically includes:
The microcontroller unit controls the speaker to play the second audio indicated by the identifier of the first audio.

In a possible implementation, the second audio includes the first data encoded in a second audio format, the microcontroller unit supports decoding of the second audio in the second audio format, and that the microcontroller unit controls the speaker to play the first audio specifically includes:
The microcontroller unit decodes the second audio indicated by the identifier of the first audio, to obtain the first data.

The microcontroller unit controls the speaker to play the first data.

In a possible implementation, after the microcontroller unit sends the second message to the application processor, the method further includes:
After receiving a fourth message sent by the application processor, the microcontroller unit controls the speaker to play the first audio, where the fourth message indicates the microcontroller unit to play the first audio.

In a possible implementation, after the microcontroller unit receives the fourth message, the method further includes:
The microcontroller unit sends a fifth message to the application processor, where the fifth message indicates the application processor to switch to a sleep state.

In a possible implementation, after the microcontroller unit receives the fourth message, the method further includes:
The microcontroller unit sends a fifth message to the application processor, where the fifth message indicates the application processor to switch to a sleep state.

In a possible implementation, the microcontroller unit receives an adjusted volume value sent by the application processor, and sets a volume value of the microcontroller unit to the adjusted volume value.

In a possible implementation, when the electronic device is in a state of continuously playing audios and the microcontroller unit determines, based on the first message, that the microcontroller unit supports playing of the first audio, the method further includes:
After completing playing of the first audio, the microcontroller unit notifies the application processor to switch to a non-sleep state.

after receiving a seventh message sent by the application processor, the microcontroller unit determines, based on the seventh message, whether the microcontroller unit supports playing of a third audio.

According to a fifth aspect, this application provides another processing method, including:
A second electronic device receives a first input, where the first input is used to trigger the electronic device to play a first audio by using a first application.

The second electronic device determines, in response to the first input based on first information of the first audio, whether the second electronic device supports playing of the first audio.

When the second electronic device determines, based on the first information, that the second electronic device supports playing of the first audio, the second electronic device controls a speaker to play the first audio.

In a possible implementation, before the microcontroller unit receives the first input, the method further includes:
A microcontroller unit receives a first instruction sent by an application processor, where the first instruction instructs the microcontroller unit to display an interface of the first application.

The microcontroller unit controls, in response to the first instruction, a display to display the interface of the first application, where the interface of the first application includes a first control, the first control is used to trigger the electronic device to play the first audio, and the first input is an input for the first control.

In a possible implementation, the method further includes:
When the microcontroller unit determines, based on the first information, that the microcontroller unit does not support playing of the first audio, the microcontroller unit sends a first message to the application processor.

After receiving first data sent by the application processor, the microcontroller unit controls the speaker to play the first data.

In a possible implementation, the first message is used to trigger the application processor to switch to a non-sleep state.

In a possible implementation, the first information includes a first audio format of the first audio, and that the microcontroller unit determines, based on the first information, that the microcontroller unit supports playing of the first audio specifically includes:
When determining, based on the first audio format, that the microcontroller unit supports decoding of the first audio in the first audio format, the microcontroller unit determines that the microcontroller unit supports playing of the first audio.

In a possible implementation, that the microcontroller unit controls the speaker to play the first data specifically includes:
The microcontroller unit decodes the first audio to obtain the first data.

The microcontroller unit controls the speaker to play the first data.

In a possible implementation, the first information includes an identifier of the first audio, and that the microcontroller unit determines, based on the first information, that the microcontroller unit supports playing of the first audio specifically includes:
When determining, based on the identifier of the first audio, that a second audio corresponding to the identifier of the first audio is stored, the microcontroller unit determines that the microcontroller unit supports playing of the first audio.

In a possible implementation, the second audio includes the first data obtained through decoding, and that the microcontroller unit controls the speaker to play the first audio specifically includes:
The microcontroller unit controls the speaker to play the second audio indicated by the identifier of the first audio.

In a possible implementation, the second audio includes the first data encoded in a second audio format, the microcontroller unit supports decoding of the second audio in the second audio format, and that the microcontroller unit controls the speaker to play the first audio specifically includes:
The microcontroller unit decodes the second audio indicated by the identifier of the first audio, to obtain the first data.

The microcontroller unit controls the speaker to play the first data.

In a possible implementation, when the microcontroller unit controls the speaker to play an audio, the method further includes:
The application processor detects a first request of a second application, where the first request is used to request use of the speaker.

The application processor sends a sixth message to the microcontroller unit, where the sixth message indicates the microcontroller unit to stop playing the audio.

In a possible implementation, a priority of the second application is higher than a priority of the first application.

In a possible implementation, the microcontroller unit receives an adjusted volume value sent by the application processor, and sets a volume value of the microcontroller unit to the adjusted volume value.

In a possible implementation, the electronic device is in a state of continuously playing audios and the microcontroller unit determines, based on the first information, that the microcontroller unit supports playing of the first audio; and the method further includes:
After the microcontroller unit completes playing of the first audio, if the microcontroller unit determines, based on second information of a third audio, that playing of the third audio is not supported, the microcontroller unit notifies the application processor to switch to the non-sleep state, and sends the third audio to the application processor.

According to a sixth aspect, this application provides another processing method, including:
A first electronic device receives a first message sent by a second electronic device, where the first message includes a first audio.

The first electronic device decodes the first audio to obtain first data.

The first electronic device sends the first data to the second electronic device, where the first data is played by the second electronic device through a speaker.

In a possible implementation, the method further includes:
An application processor controls a display to display a first interface, where the first interface includes an icon of a first application.

The application processor receives a second input for the icon of the first application.

The application processor sends a first instruction to a microcontroller unit in response to the second input, where the first instruction instructs the microcontroller unit to display an interface of the first application.

After sending the first instruction, the application processor switches to a sleep state.

In a possible implementation, the first message is used to trigger the application processor to switch to a non-sleep state.

In a possible implementation, the method further includes:
The application processor receives an input for volume adjustment in a process of playing an audio by the microcontroller unit, and sets a volume value of the application processor to an adjusted volume value.

The application processor sends the adjusted volume value to the microcontroller unit.

In a possible implementation, the method further includes: after receiving a third audio sent by the microcontroller unit, the application processor switches to the non-sleep state, and decodes the third audio.

According to a seventh aspect, this application provides a processing apparatus, including an application processor and a microcontroller unit.

The application processor is configured to receive a first input, where the first input is used to trigger an electronic device to play a first audio by using a first application.

The application processor is further configured to send a first message to the microcontroller unit in response to the first input.

When the microcontroller unit determines, based on the first message, that the microcontroller unit supports playing of the first audio, the microcontroller unit is configured to send a second message to the application processor.

The microcontroller unit is configured to control a speaker to play the first audio, and the application processor switches to a sleep state, after the microcontroller unit sends the second message to the application processor.

In a possible implementation, the microcontroller unit is configured to send a third message to the application processor when the microcontroller unit determines, based on the first message, that the microcontroller unit does not support playing of the first audio.

The application processor is configured to decode the first audio in response to the third message, to obtain first data.

The application processor is further configured to send the first data to the microcontroller unit.

The microcontroller unit is further configured to control the speaker to play the first data.

In a possible implementation, the first message includes a first audio format of the first audio.

The microcontroller unit is specifically configured to: when the microcontroller unit determines, based on the first audio format, that the microcontroller unit supports decoding of the first audio in the first audio format, determine that the microcontroller unit supports playing of the first audio.

In a possible implementation, the application processor is specifically configured to send the first audio to the microcontroller unit in response to the second message, where the second message indicates that the microcontroller unit supports decoding of the first audio.

The microcontroller unit is further configured to: after receiving the first audio, decode the first audio to obtain the first data.

The microcontroller unit is further configured to control the speaker to play the first data.

The application processor is further configured to: after completing sending of the first audio, switch to the sleep state.

In a possible implementation, the first message includes an identifier of the first audio.

The microcontroller unit is configured to: when the microcontroller unit determines, based on the identifier of the first audio, that a second audio corresponding to the identifier of the first audio is stored, determine that the microcontroller unit supports playing of the first audio.

In a possible implementation, the second audio includes the first data obtained through decoding, and the microcontroller unit is specifically configured to control the speaker to play the second audio indicated by the identifier of the first audio.

In a possible implementation, the second audio includes the first data encoded in a second audio format, the microcontroller unit supports decoding of the second audio in the second audio format, and the microcontroller unit is specifically configured to decode the second audio indicated by the identifier of the first audio, to obtain the first data.

The microcontroller unit is further configured to control the speaker to play the first data.

In a possible implementation, the application processor is further configured to: after receiving the second message, send, to the microcontroller unit, a fourth message indicating the microcontroller unit to play the first audio.

The microcontroller unit is further configured to: after receiving the fourth message, control the speaker to play the first audio.

In a possible implementation, the microcontroller unit is further configured to send a fifth message to the application processor after the microcontroller unit receives the fourth message, where the fifth message indicates the application processor to switch to the sleep state.

The application processor is specifically configured to switch to the sleep state in response to the fifth message.

In a possible implementation, the application processor is configured to detect a first request of a second application when the microcontroller unit controls the speaker to play an audio, where the first request is used to request use of the speaker.

The application processor is configured to send a sixth message to the microcontroller unit after the first request is detected, where the sixth message indicates the microcontroller unit to stop playing the audio.

In a possible implementation, a priority of the second application is higher than a priority of the first application.

In a possible implementation, the application processor is further configured to receive an input for volume adjustment in a process of playing an audio by the microcontroller unit, and set a volume value of the application processor to an adjusted volume value.

The application processor is further configured to send the adjusted volume value to the microcontroller unit.

The microcontroller unit is further configured to set a volume value of the microcontroller unit to the adjusted volume value.

In a possible implementation,
the microcontroller unit is further configured to: when the electronic device is in a state of continuously playing audios and the microcontroller unit determines, based on the first message, that the microcontroller unit supports playing of the first audio, after completing playing of the first audio, notify the application processor to switch to a non-sleep state.

The application processor is further configured to: after switching to the non-sleep state, send a seventh message to the microcontroller unit, where the first audio and a third audio belong to a same playlist.

The microcontroller unit is further configured to determine, based on the seventh message, whether the microcontroller unit supports playing of the third audio.

According to an eighth aspect, this application provides another processing apparatus, including an application processor and a microcontroller unit.

The microcontroller unit is configured to receive a first input, where the first input is used to trigger an electronic device to play a first audio by using a first application.

The microcontroller unit is configured to determine, in response to the first input based on first information of the first audio, whether the microcontroller unit supports playing of the first audio.

The microcontroller unit is further configured to: when the microcontroller unit determines, based on the first information, that the microcontroller unit supports playing of the first audio, control a speaker to play the first audio.

In a possible implementation, before the microcontroller unit receives the first input, the method further includes:
The application processor is further configured to control a display to display a first interface, where the first interface includes an icon of the first application.

The application processor is further configured to receive a second input for the icon of the first application.

The application processor is further configured to send a first instruction to the microcontroller unit in response to the second input, where the first instruction instructs the microcontroller unit to display an interface of the first application.

The application processor is further configured to: after sending the first instruction, switch to a sleep state.

The microcontroller unit is further configured to control, in response to the first instruction, the display to display the interface of the first application, where the interface of the first application includes a first control, the first control is used to trigger the electronic device to play the first audio, and the first input is an input for the first control.

In a possible implementation, the microcontroller unit is configured to: when the microcontroller unit determines, based on the first information, that the microcontroller unit does not support playing of the first audio, send a first message to the application processor.

The application processor is further configured to decode the first audio in response to the first message, to obtain first data.

The application processor is further configured to send the first data to the microcontroller unit.

The microcontroller unit is further configured to control the speaker to play the first data.

In a possible implementation, the first message is used to trigger the application processor to switch to a non-sleep state.

In a possible implementation, the first information includes a first audio format of the first audio.

The microcontroller unit is specifically configured to: when the microcontroller unit determines, based on the first audio format, that the microcontroller unit supports decoding of the first audio in the first audio format, determine that the microcontroller unit supports playing of the first audio.

In a possible implementation, the microcontroller unit is specifically configured to decode the first audio to obtain the first data.

The microcontroller unit is further configured to control the speaker to play the first data.

In a possible implementation, the first information includes an identifier of the first audio. The microcontroller unit is specifically configured to: when the microcontroller unit determines, based on the identifier of the first audio, that a second audio corresponding to the identifier of the first audio is stored, determine that the microcontroller unit supports playing of the first audio.

In a possible implementation, the second audio includes the first data obtained through decoding, and the microcontroller unit is specifically configured to control the speaker to play the second audio indicated by the identifier of the first audio.

In a possible implementation, the second audio includes the first data encoded in a second audio format, and the microcontroller unit supports decoding of the second audio in the second audio format.

The microcontroller unit is specifically configured to decode the second audio indicated by the identifier of the first audio, to obtain the first data.

The microcontroller unit is further configured to control the speaker to play the first data.

In a possible implementation, the application processor is configured to detect a first request of a second application when the microcontroller unit controls the speaker to play an audio, where the first request is used to request use of the speaker.

The application processor is further configured to send a sixth message to the microcontroller unit when detecting the first request of the second application, where the sixth message indicates the microcontroller unit to stop playing the audio.

In a possible implementation, a priority of the second application is higher than a priority of the first application.

In a possible implementation, the application processor is further configured to receive an input for volume adjustment in a process of playing the audio by the microcontroller unit, and set a volume value of the application processor to an adjusted volume value.

The application processor is further configured to send the adjusted volume value to the microcontroller unit.

The microcontroller unit is further configured to set a volume value of the microcontroller unit to the adjusted volume value.

In a possible implementation, the microcontroller unit is further configured to: when the electronic device is in a state of continuously playing audios and the microcontroller unit determines, based on the first information, that the microcontroller unit supports playing of the first audio, after completing playing of the first audio, determine, based on second information of a third audio, whether playing of the third audio is supported.

The microcontroller unit is further configured to: when determining, based on the second information of the third audio, that playing of the third audio is not supported, notify the application processor to switch to the non-sleep state, and send the third audio to the application processor.

The application processor is further configured to: after switching to the non-sleep state, decode the third audio.

According to a ninth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the processing method according to any possible implementation of any one of the foregoing aspects.

According to a tenth aspect, an embodiment of this application provides a computer storage medium, including computer instructions. When the computer instructions are run on an electronic device, the electronic device is enabled to perform the processing method according to any possible implementation of any one of the foregoing aspects.

According to an eleventh aspect, an embodiment of this application provides a chip system. The chip system is used in an electronic device. The chip system includes one or more processors. The processor is configured to invoke computer instructions to enable the electronic device to perform the processing method according to any possible implementation of any one of the foregoing aspects.

### BRIEF DESCRIPTION OF DRAWINGS

FIG. 1 is a diagram of a hardware structure of an electronic device 100 according to an embodiment of this application;
FIG. 2A to FIG. 2C are a schematic flowchart of a processing method according to an embodiment of this application;
FIG. 3A and FIG. 3B are a diagram of a software architecture according to an embodiment of this application;
FIG. 4A to FIG. 4C are a schematic flowchart of a processing method according to an embodiment of this application;
FIG. 5A and FIG. 5B are a schematic flowchart of a speaker scheduling method according to an embodiment of this application;
FIG. 6 is a schematic flowchart of a volume adjustment method according to an embodiment of this application;
FIG. 7A and FIG. 7B are a schematic flowchart of another processing method according to an embodiment of this application;
FIG. 8A and FIG. 8B are a diagram of another software architecture according to an embodiment of this application;
FIG. 9A and FIG. 9B are a schematic flowchart of another processing method according to an embodiment of this application;
FIG. 10 is a schematic flowchart of another speaker scheduling method according to an embodiment of this application; and
FIG. 11 is a schematic flowchart of another volume adjustment method according to an embodiment of this application.

### DESCRIPTION OF EMBODIMENTS

The following clearly describes technical solutions in embodiments of this application in detail with reference to the accompanying drawings of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

In the following, the terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), which is a user interface displayed in a graphical manner and related to computer operations. The user interface may be a visual interface element such as a text, an icon, a button, a menu, a tab, a text box, a dialog box, a status bar, a navigation bar, or a Widget that is displayed on a display of the electronic device.

An embodiment of this application provides a processing method. An electronic device 100 includes an application processor and a microcontroller unit. Runtime power consumption of the microcontroller unit is lower than runtime power consumption of the application processor. When playing a first audio, the electronic device 100 may determine whether the microcontroller unit supports playing of the first audio, and when determining that the microcontroller unit supports playing of the first audio, play data of the first audio through the microcontroller unit. When determining that the microcontroller unit does not support playing of the first audio, the electronic device 100 may decode the first audio through the application processor, to obtain first data. The application processor may send the first data to the microcontroller unit. The microcontroller unit controls a speaker to play the first data. In this way, the electronic device 100 plays an audio through the microcontroller unit. Because power consumption of the microcontroller unit is lower than power consumption of the application processor, power consumption of playing the audio by the electronic device 100 can be reduced. In addition, the application processor may switch to a sleep state when the microcontroller unit controls the speaker to play a sound, to further reduce power consumption.

When the application processor is in the sleep state (also referred to as a standby state or a low power consumption state), a current input to the application processor is small, and power consumption of the application processor is low. When the application processor is in a non-sleep state (also referred to as a high power consumption state), a current input to the application processor is large, and power consumption of the application processor is high. It may be understood that power consumption of the application processor in the non-sleep state is higher than power consumption of the application processor in the sleep state, and an input current of the application processor in the non-sleep state is greater than an input current of the application processor in the sleep state.

The following describes the electronic device 100 provided in this embodiment of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in embodiments of this application.

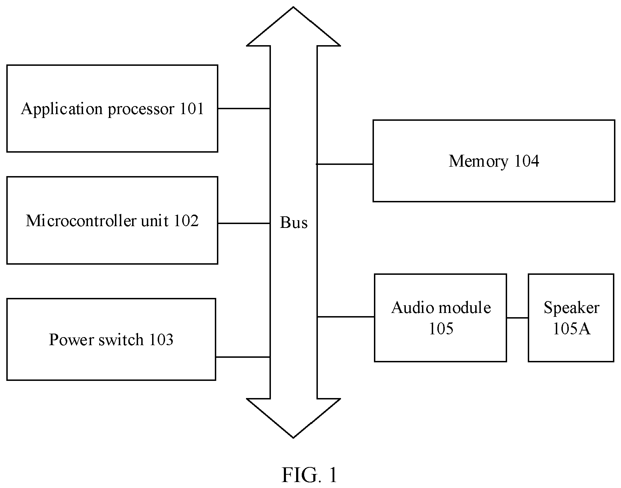

FIG. 1 shows an example of a diagram of a hardware structure of an electronic device 100 according to an embodiment of this application.

As shown in FIG. 1, the electronic device 100 may include an application processor (application processor, AP) 101, a microcontroller unit (microcontroller unit, MCU) 102, a power switch 103, a memory 104, an audio module 105, a speaker 105A, and the like. The foregoing modules may be connected through a bus or in another manner. In this embodiment of this application, an example in which the modules are connected through the bus is used.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

Both the application processor 101 and the microcontroller unit 102 may be configured to read and execute computer-readable instructions; and may generate an operation control signal based on an instruction operation code and a time sequence signal, to complete control over instruction fetching and instruction execution.

In some embodiments, the application processor 101 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the application processor 101 may include a plurality of groups of I2C buses. The application processor 101 may be separately coupled to different components through different I2C bus interfaces, for example, a touch sensor, a charger, a flash, and a camera. For example, the application processor 101 may be coupled to the touch sensor through the I2C interface, so that the application processor 101 communicates with the touch sensor through the I2C bus interface, to implement a touch function of the electronic device 100. The I2S interface may be further configured to perform audio communication. In some embodiments, the application processor 101 may be coupled to the audio module 105 through the I2S bus, to implement communication between the application processor 101 and the audio module 105.

It should be noted that the microcontroller unit 102 may also include the foregoing one or more interfaces. It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from an interface connection manner in this embodiment, or use a combination of a plurality of interface connection manners.

In a specific implementation, the application processor 101 may be integrated with a plurality of modules such as a central processing unit (central process unit, CPU), a graphics processing unit (graphics processing unit, GPU), a video codec, and a memory subsystem. In some examples, the application processor 101 may be an Arm-coretex-A core processor whose clock frequency (also referred to as an operating frequency) exceeds 1 GHz, and usually includes four or more processing cores. A memory capacity of a random access memory of the application processor 101 is about 2 GB or more. The application processor 101 may be configured to run an operating system such as Linux, Android, Windows, or HarmonyOS. A runtime current of the application processor 101 is usually 100 mAh, and a standby current is usually 4 mAh. In this embodiment of this application, the application processor 101 may be configured to decode an audio to obtain data of the to-be-played audio. The application processor 101 supports decoding of audios in a plurality of audio formats, for example, moving picture experts group audio layer 3 (moving picture experts group audio layer III, MP3), advanced audio coding (advanced audio coding, ACC), adaptive multi-rate (adaptive multi-rate, AMR) pulse code modulation (pulse code modulation, PCM), Ogg (oggvobis), the 3rd generation partner project (the 3rd generation partner project, 3GP), advanced streaming format (advanced streaming format, ASF), AV1, transport stream (transport stream, TS), multimedia container file format (mkv file format, MKV), MP4 (mpeg-4 part 14), windows media audio (windows media audio, WMA), waveform sound file (WAV), M4A, audio data transport stream (audio data transport stream, ADTS), and SLK. It should be noted that the application processor 101 cannot decode an audio in an SLK audio format by using a service provided by a system, and the application processor 101 may decode the audio in the SLK audio format based on a component provided by an application.

The microcontroller unit 102 may include a central processing unit, a memory, a counter (Timer), and one or more interfaces. In some examples, the microcontroller unit 102 may be an Arm-Coretex-M core processor whose clock frequency (also referred to as an operating frequency) is about 192 MHz, and a processor core is usually a single core. A memory capacity of a random access memory of the microcontroller unit 102 is about 2 MB. The microcontroller unit 102 may support running of a lightweight internet of things operating system, for example, an operating system such as LiteOS or HarmonyOS. A runtime current of the microcontroller unit 102 is usually 2 mAh, and a standby current is usually 0.1 mAh. For example, the microcontroller unit 102 may be an STL4R9 chip, a Dialog single-chip microcomputer, or the like. In this embodiment of this application, the microcontroller unit 102 may also be configured to decode an audio to obtain audio data. It should be noted that, because a clock frequency of the microcontroller unit 102 is low and a running memory is small, the microcontroller unit 102 can only support decoding of an audio in a part of audio formats. For example, audio formats supported by the microcontroller unit 102 for decoding include PCM, WAV, AMR, MP3, ACC and SLK. Compared with the application processor 101, the microcontroller unit does not support decoding of audios in audio formats such as Ogg, 3GP, ASF, TS, MKV, MP4, WMA, M4A and ADTS.

In some examples, a music application provides a permission-limited audio. The application processor 101 may decode the permission-limited audio by using a parameter provided by the music application, to obtain audio data. The microcontroller unit 102 does not support decoding of the permission-limited audio. Therefore, if a permission of an audio is limited, the microcontroller unit 102 does not support decoding of the audio regardless of whether the audio is in any audio format.

It should be noted that the audio formats supported by the application processor 101 and the microcontroller unit 102 are merely examples, and this is not limited in this embodiment of this application.

The power switch 103 may be configured to control a power supply to supply power to the electronic device 100.

The memory 104 is configured to store various software programs and/or a plurality of groups of instructions. In a specific implementation, the memory 104 may include a high-speed random access memory, and may also include a non-volatile memory, for example, one or more magnetic disk storage devices, flash memory devices, or other non-volatile solid-state storage devices. In some embodiments, a memory in the application processor 101 and/or a memory in the microcontroller unit 102 are/is caches/a cache. The memory may store instructions or data just used or cyclically used. If the instructions or the data needs to be used again, the instructions or the data may be directly invoked from the memory. Repeated access is avoided, and waiting time of the application processor 101 and/or the microcontroller unit 102 is reduced, to improve system efficiency. In some examples, the memory 102 is coupled to the application processor 101 and the microcontroller unit 102.

The electronic device 100 may implement an audio function, for example, music playing, through the audio module 105, the speaker 105A, the application processor 101 (or the microcontroller unit 102), and the like.

The audio module 105 is configured to convert digital audio information into an analog audio signal output, and is also configured to convert an analog audio input into a digital audio signal. The speaker 105A, also referred to as a "loudspeaker", is configured to convert an audio electrical signal into a sound signal.

Optionally, the electronic device 100 may further include a receiver, a microphone, and the like. The receiver, also referred to as an "earpiece", is configured to convert an audio electrical signal into a sound signal. The microphone, also referred to as a "mike" or a "mic", is configured to convert a sound signal into an electrical signal.

Optionally, the electronic device 100 may further include a display (not shown in FIG. 1). The display may be configured to display an image, a video, a control, text information, and the like. The display may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 205, where N is a positive integer greater than 1.

Optionally, the electronic device 100 may further include a communication module (not shown in FIG. 1), and the communication module may include a Bluetooth module, a WLAN module, and the like. The electronic device 100 may receive or transmit a wireless signal through the communication module. The electronic device 100 may establish a communication connection to another electronic device through the communication module, and exchange data with the electronic device 100 based on the communication connection.

Optionally, the electronic device 100 may include one or more sensors. For example, the electronic device 100 may include a touch sensor, and the touch sensor may also be referred to as a "touch component". The touch sensor may be disposed on the display, and the touch sensor and the display form a touchscreen, which may also be referred to as a "touch screen". The touch sensor may be configured to detect a touch operation performed on or near the touch sensor.

In some embodiments of this application, the electronic device 100 is a smartwatch, and the electronic device 100 may further include a watch band and a watch face. The watch face may include the foregoing display, to display an image, a video, a control, text information, and the like. The watch band may be configured to fasten the electronic device 100 to a human limb for ease of wearing.

In a possible implementation, the electronic device 100 includes an application processor and a microcontroller unit. After receiving an input for playing a first audio, the application processor in a non-sleep state of the electronic device 100 may send, to the microcontroller unit, a query request used to query whether the microcontroller unit supports playing of the first audio. If a result that is returned by the microcontroller unit and received by the application processor is that playing of the first audio is supported, the application processor may notify the microcontroller unit to play the first audio, and switch to a sleep state when the microcontroller unit plays the first audio. If a result that is returned by the microcontroller unit and received by the application processor is that playing of the first audio is not supported, the application processor may perform a decoding operation on the first audio to obtain first data. The application processor may send the first data to the microcontroller unit, and the microcontroller unit may control a speaker to play the first data. In this way, the microcontroller unit with low power consumption in the electronic device 100 controls the speaker to play an audio, so that the application processor with high power consumption does not need to perform an audio playing operation, to reduce device power consumption.

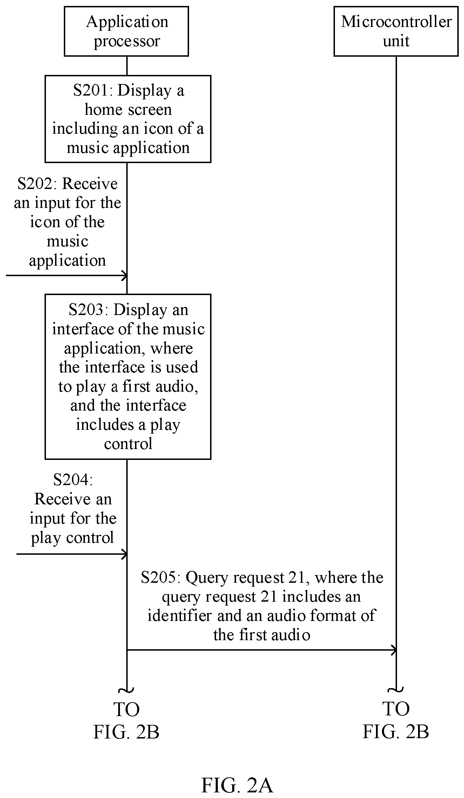

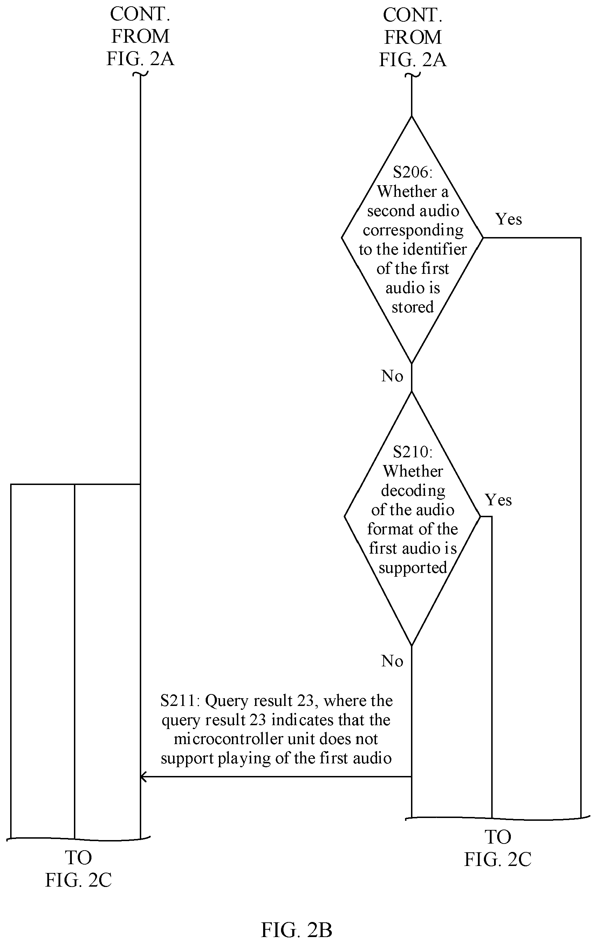

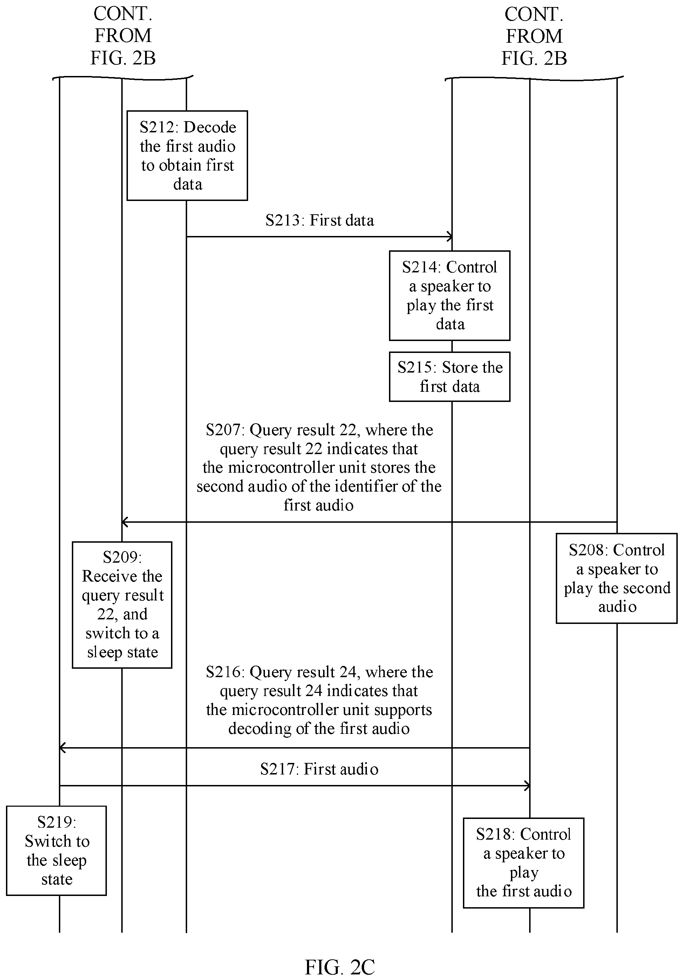

For example, as shown in FIG. 2A to FIG. 2C, the processing method includes the following steps.

S201: An application processor controls a display to display a home screen including an icon of a music application.

In this case, the application processor is in a non-sleep state, and the application processor may control the display to display the home screen including the icon of the music application.

S202: The application processor receives an input for the icon of the music application.

The application processor may obtain the input for the icon of the music application. The input for the icon of the music application may be a touch input, for example, tap, or touch and hold, or the input may be a voice instruction input, a hover gesture input (for example, swinging a hand above a camera of an electronic device 100), a body input (for example, shaking the electronic device 100), or the like. This is not limited in this embodiment of this application.

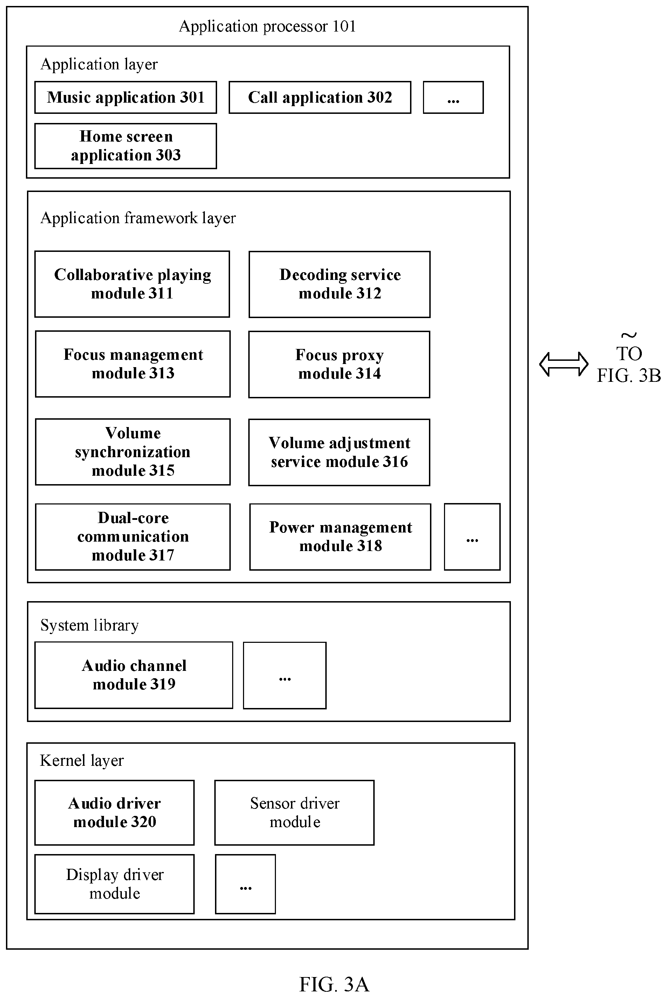

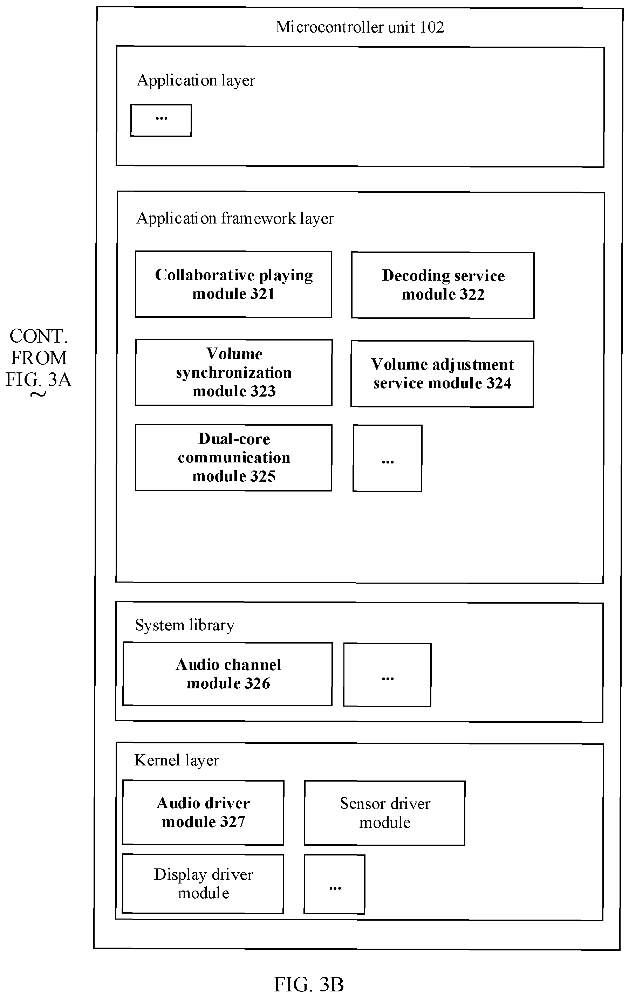

It should be noted that the music application may be any application used to play an audio. The application may be installed in the electronic device 100 at delivery, or the application may be downloaded by a user through a network. For example, the music application may be a music application 301 shown in FIG. 3A and FIG. 3B.

S203: The application processor displays an interface of the music application, where the interface is used to play an audio, and the interface includes a play control.

The application processor may control, in response to the input for the icon of the music application, the display to display the interface of the music application. The interface of the music application may include the play control, and the play control may be used to trigger the electronic device 100 to play a first audio.

Optionally, the interface of the music application may further include song information of the first audio, and the song information may include but is not limited to a song name, a singer name, and the like.

S204: The application processor receives an input for the player control.

The play control may be used to trigger the electronic device 100 to play the first audio. The application processor may receive the input for the play control, and perform, in response to the input, a subsequent step of playing the first audio.

The first audio is an audio stored in the application processor. Alternatively, the first audio is an audio stored in a memory of the electronic device 100, and the memory belongs to neither the application processor nor a microcontroller unit.

In some examples, the application processor may obtain, through a sensor driver module (for example, a touch sensor module), location information of a screen touch point touched by the user, and the application processor may determine, based on the location information of the screen touch point, that the input is the input for the play control.

In some other examples, not limited to the foregoing step S201 to step S204, the application processor in the non-sleep state may perform step S205 in response to a voice instruction used by the user to play the first audio. Before receiving the voice instruction of the user, the application processor may control an interface displayed on the display not to be the interface of the music application. In other words, when controlling the display to display any interface, the application processor may perform step S205 in response to the voice instruction used by the user to play the first audio.

Alternatively, when the electronic device 100 displays an interface of a file management application, the interface includes an audio option corresponding to one or more stored audios, the one or more audios include the first audio, and the one or more audio options include a first audio option. After receiving an input of the user for the first audio option, the electronic device 100 may perform step S205.

In conclusion, after receiving the input for playing the first audio by using the music application, the application processor may perform step S205.

In some embodiments, after receiving the input for the play control, the application processor may determine whether a permission of the first audio is limited. The application processor may perform step S208 when determining that the permission of the first audio is limited. The application processor may perform step S205 when determining that the permission of the first audio is not limited. A file attribute of the first audio includes a permission flag bit, and the application processor may determine, based on the permission flag bit of the first audio, whether the permission of the first audio is limited. For example, when a value of the permission flag bit that is of the first audio and that is obtained by the application processor is a first value, the application processor determines that the permission of the first audio is limited. When a value of the permission flag bit that is of the first audio and that is obtained by the application processor is a second value, the application processor determines that the permission of the first audio is not limited, where the first value is different from the second value.

S205: The application processor sends a query request 21 to the microcontroller unit, where the query request 21 includes an identifier and an audio format of the first audio.

The query request 21 may be used to query whether the microcontroller unit supports playing of the first audio. The identifier of the first audio may be a name of the first audio. The audio format is also referred to as an audio type, and may be understood as an audio file format of an audio. In some examples, the application processor may obtain a suffix of an audio file of an audio, to obtain an audio format of the audio.

S206: The microcontroller unit determines whether a second audio corresponding to the identifier of the first audio is stored.

It should be noted that the microcontroller unit may store audio data obtained by the application processor by decoding the audio, and the audio data that is obtained by the application processor through decoding and stored in the microcontroller unit may be referred to as a buffered audio. In other words, if the application processor decodes the first audio when the electronic device 100 plays the audio last time, the application processor may send, to the microcontroller unit, first data obtained by decoding the first audio. The microcontroller unit may store the first data.

In some examples, the microcontroller unit may directly store the first data to obtain a buffered audio, and the buffered audio including the first data may be referred to as the second audio.

In some other examples, to reduce storage space of the second audio, the electronic device 100 may store more second audios. The microcontroller unit may encode the first data by using an audio format supported by the microcontroller unit, to obtain the second audio. In other words, the second audio may include the first data encoded by using the audio format supported by the microcontroller unit. In this way, storage space of the electronic device 100 can be saved by compressing the audio data through encoding, so that the electronic device 100 can store more second audio.

After receiving the query request 21, the microcontroller unit may determine, based on the identifier of the first audio in the query request 21 and a correspondence between an identifier of an audio and audio data stored in the microcontroller unit, whether the second audio corresponding to the identifier of the first audio to be played is stored.

When the microcontroller unit determines that the second audio is stored, step S207 may be performed. When the microcontroller unit determines that the second audio is not stored, step S210 may be performed.

S207: The microcontroller unit sends a query result 22 to the application processor, where the query result 22 indicates that the microcontroller unit stores the second audio corresponding to the identifier of the first audio.

The microcontroller unit may send the query result 22 to the application processor when determining that the second audio corresponding to the identifier of the first audio is stored. The query result 22 may indicate that the second audio corresponding to the identifier of the first audio is stored, that is, the microcontroller unit supports playing of the first audio.

S208: The microcontroller unit controls a speaker to play the second audio.

It should be noted that, when the microcontroller unit stores the second audio corresponding to the first audio, if the second audio includes the first data obtained by the application processor by decoding the first audio, the microcontroller unit may directly read the first data, and control the speaker to play the first data; or if the second audio includes the encoded first data, the microcontroller unit first decodes the second audio to obtain the first data, and then controls the speaker to play the first data.

It may be understood that a sequence in which the microcontroller unit may perform step S207 and step S208 is not limited to first performing step S207 and then performing step S208. Alternatively, the microcontroller unit may first perform step S208, and then perform step S207. Alternatively, the two steps are performed simultaneously. This is not limited in this embodiment of this application.

S209: The application processor receives the query result 22, and switches to a sleep state.

The application processor may switch from the non-sleep state to the sleep state when receiving the query result 22. In this way, the microcontroller unit controls the speaker to play the first audio, and the application processor switches to the sleep state, to greatly reduce power consumption of the electronic device 100 for playing the audio.

Optionally, after determining that the second audio is stored, the microcontroller unit may send the query result 22 to the application processor. The application processor may send a play indication to the microcontroller unit when receiving the query result 22, where the play indication indicates the microcontroller unit to play the audio. After receiving the play indication, the microcontroller unit may control the speaker to play the second audio. The application processor may further switch from the non-sleep state to the sleep state after sending the play indication to the microcontroller unit.

Alternatively, after receiving the play indication, the microcontroller unit may control the speaker to play the second audio, and send, to the application processor, play status information indicating that the microcontroller unit is playing the audio. The application processor may switch from the non-sleep state to the sleep state after receiving the play status information.

It should be noted that, when the electronic device 100 plays the first audio, if the electronic device 100 is in a state of continuously playing audios (for example, a sequential play state or a random play state), the electronic device 100 may continue to play another audio in a playlist of the first audio after completing playing of the first audio. For example, the electronic device 100 may continue to play a third audio after controlling the speaker to play the first data, where the third audio is different from the first audio, and the third audio and the first audio belong to a same playlist.

Herein, after completing playing of the second audio, the microcontroller unit may notify the application processor to switch from the sleep state to the non-sleep state. After switching to the non-sleep state, the application processor may send a query request to the microcontroller unit again, where the query request includes an identifier and an audio format of the third audio. For specific descriptions, refer to the foregoing step S205. Details are not described herein again.

S210: The microcontroller unit determines whether decoding of the audio format of the first audio is supported.

After determining that the second audio corresponding to the identifier of the first audio is not stored, the microcontroller unit may determine, based on the audio format of the first audio in the query request 21, whether the microcontroller unit supports decoding of the audio format of the first audio.

The microcontroller unit of the electronic device 100 stores an audio format that can be decoded by the microcontroller unit. The electronic device 100 may search whether the audio format of the first audio to be played exists in stored audio formats.

When the microcontroller unit determines that the audio format of the first audio to be played exists in the stored audio formats, that is, determines that the microcontroller unit supports decoding of the first audio to be played, step S216 may be performed.

When the microcontroller unit determines that the audio format of the first audio to be played does not exist in the stored audio formats, that is, determines that the microcontroller unit does not support decoding of the first audio to be played, step S211 may be performed.

It should be noted that, this is not limited to a sequence of first determining whether the microcontroller unit stores the second audio corresponding to the identifier of the first audio and then determining, when the microcontroller unit does not store the second audio, that the microcontroller unit does not support decoding of the audio format of the first audio. The microcontroller unit may first determine whether the microcontroller unit supports decoding of the audio format of the first audio, and then determine, when the microcontroller unit does not support decoding of the audio format of the first audio, whether the microcontroller unit stores the second audio corresponding to the identifier of the first audio. Alternatively, the microcontroller unit may simultaneously determine whether the microcontroller unit supports decoding of the audio format of the first audio and whether the microcontroller unit stores the second audio corresponding to the identifier of the first audio. This is not limited in this embodiment of this application.

In some embodiments, the query request 21 may include only the identifier of the first audio, and correspondingly, the microcontroller unit may determine only whether the second audio is stored. Alternatively, the query request 21 may include only the audio format of the first audio, and correspondingly, the microcontroller unit may determine only whether decoding of the first audio is supported.

S211: The microcontroller unit sends a query result 23 to the application processor, where the query result 23 indicates that the microcontroller unit does not support playing of the first audio.

The microcontroller unit may send the query result 23 to the application processor when determining that the second audio corresponding to the identifier of the first audio is not stored and decoding of the audio format of the first audio is not supported. The query result 23 may indicate that the microcontroller unit does not support playing of the first audio.

S212: The application processor decodes the first audio to obtain the first data.

After receiving the query result 23, the application processor may decode the first audio by using a decoding algorithm, to obtain the first data. A parameter of the decoding algorithm may be a specified parameter or a parameter provided by the music application. In this way, when decoding an audio provided by the third-party music application, the electronic device 100 may use the parameter provided by the third-party music application to implement a decoding operation of the first audio.

S213: The application processor sends the first data to the microcontroller unit.

The application processor may send the first data obtained through decoding to the microcontroller unit.

S214: The microcontroller unit controls the speaker to play the first data.

In some examples, the microcontroller unit may transmit the first data to the audio module 105 shown in FIG. 1, and jointly implement a play operation of the first audio with the audio module 105 and the speaker 105A.

S215: The microcontroller unit stores the first data.

The microcontroller unit may store the first data to obtain the second audio.

Optionally, the microcontroller unit may encode the first data by using a supported encoding scheme, to obtain the second audio in a specified audio format. The specified audio format is an audio format supported by the microcontroller unit. For details, refer to the embodiment shown in FIG. 1. Details are not described herein again. In this way, storage space of the electronic device 100 can be saved by compressing the audio data through encoding, so that the electronic device 100 can store more second audio.

It should be noted that, when the electronic device 100 plays the first audio, if the electronic device 100 is in a state of continuously playing audios (for example, a sequential play state or a random play state), the electronic device 100 may continue to play another audio in a playlist of the first audio after completing playing of the first audio. For example, the electronic device 100 may continue to play a third audio after controlling the speaker to play the first data, where the third audio is different from the first audio, and the third audio and the first audio belong to a same playlist.

Herein, after decoding the first audio to obtain the first data, the application processor may send a query request to the microcontroller unit again, where the query request includes an identifier and an audio format of the third audio. For specific descriptions, refer to the foregoing step S205. Details are not described herein again.

S216: The microcontroller unit sends a query result 24 to the application processor, where the query result 24 indicates that the microcontroller unit supports decoding of the first audio.

The microcontroller unit may send the query result 24 to the application processor when determining that decoding of the audio format of the first audio is supported. The query result 24 may indicate that the microcontroller unit supports decoding of the first audio. The query result 24 may be further used to notify the application processor to send the first audio to the microcontroller unit.

S217: The application processor sends the first audio to the microcontroller unit.

After receiving the query result 24, the application processor may send the first audio to the microcontroller unit.

Optionally, if the first audio is stored in a memory that is of the electronic device 100 and that belongs to neither the application processor nor the microcontroller unit, the application processor may send a storage path of the first audio to the microcontroller unit. The microcontroller unit may read the first audio based on the storage path.

S218: The microcontroller unit controls the speaker to play the first audio.

The microcontroller unit decodes the first audio to obtain the first data, and controls the speaker to play the first data.

S219: The application processor switches to the sleep state.

The application processor may switch from the non-sleep state to the sleep state after sending the first audio to the microcontroller unit.

In some embodiments, after receiving the first audio, the microcontroller unit may send, to the application processor, play status information indicating that the microcontroller unit is playing the first audio. After receiving the play status information, the application processor may switch from the non-sleep state to the sleep state.

In some other embodiments, when sending the first audio, the application processor may send a play indication to the microcontroller unit. After receiving the play indication and the first audio, the microcontroller unit may decode and play the first audio. After receiving the first audio and the play indication, the microcontroller unit may further send, to the application processor, play status information indicating that the microcontroller unit is playing the first audio. After receiving the play status information, the application processor may switch from the non-sleep state to the sleep state.

It should be noted that, when the electronic device 100 plays the first audio, if the electronic device 100 is in a state of continuously playing audios (for example, a sequential play state or a random play state), the electronic device 100 may continue to play another audio in a playlist of the first audio after completing playing of the first audio. For example, the electronic device 100 may continue to play a third audio after controlling the speaker to play the first data, where the third audio is different from the first audio, and the third audio and the first audio belong to a same playlist.

Herein, after completing playing of the first audio, the microcontroller unit may notify the application processor to switch from the sleep state to the non-sleep state. After switching to the non-sleep state, the application processor may send a query request to the microcontroller unit again, where the query request includes an identifier and an audio format of the third audio. For specific descriptions, refer to the foregoing step S205. Details are not described herein again.

In some embodiments, after decoding the first audio to obtain the first data, the application processor may directly control the speaker to play the first data, and send the first data to the microcontroller unit, to indicate the microcontroller unit to store the first data.

In some other examples, the electronic device 100 may use the application processor to determine whether the microcontroller unit supports playing of the first audio. The application processor may obtain, from the microcontroller unit, an identifier of an audio corresponding to audio data stored in the microcontroller unit and an audio format supported by the microcontroller unit for decoding, and determine whether the microcontroller unit supports playing of the first audio. For descriptions of determining, by the application processor, whether the microcontroller unit supports playing of the first audio, refer to step S206 to step S210. Details are not described herein again.

In some embodiments, if the electronic device 100 is in the state of continuously playing audios (for example, the sequential play state or the random play state), the electronic device 100 may continue to play the another audio in the playlist of the first audio after completing playing of the first audio. For example, the electronic device 100 may continue to play the third audio after controlling the speaker to play the first data, where the third audio is different from the first audio, and the third audio and the first audio belong to the same playlist. When playing different audios, the application processor 101 of the electronic device 100 performs step S205 to query whether the microcontroller unit supports playing of the audio, increasing power consumption.

To reduce power consumption of the electronic device 100, the application processor may send, to the microcontroller unit when receiving the input for playing the first audio, a query request that includes identifiers and audio formats of all audios in the playlist. When playing a next audio, the microcontroller unit may directly send a query result to the application processor without requiring the application processor to send a query request.

In some other embodiments, the microcontroller unit may send a corresponding query result to the application processor when playing an audio whose playing is not supported by the microcontroller unit or playing an audio whose decoding is supported by the microcontroller unit. Specifically, for descriptions of determining, by the microcontroller unit, whether playing of an audio is supported and sending, by the microcontroller unit, a query result to the application processor, refer to the embodiment shown in FIG. 2A to FIG. 2C. Details are not described herein again.

With reference to the hardware structure of the electronic device 100 shown in FIG. 1, the following describes an example of a software architecture of an application processor and a microcontroller unit.

For example, as shown in FIG. 3A and FIG. 3B, software is divided into several layers in a layered architecture, and each layer has a clear role and task. The layers communicate with each other through a software interface. In some embodiments, an operating system includes but is not limited to an application layer (also referred to as an application program layer), an application framework layer, a system library, and a kernel layer.

The application layer may include a series of application packages. An application layer of the application processor 101 may include but is not limited to applications such as a music application 301, a call application 302, and a home screen application 303. The music application 301 may be configured to play a first audio. The call application 302 may be configured to answer a call. The home screen application 303 may be configured to display a home screen including an icon of an application.

The application framework layer may provide an application programming interface (application programming interface, API) and a programming framework for an application at the application layer. The application framework layer includes some predefined functions.

An application framework layer of the application processor 101 may include but is not limited to a collaborative playing module 311, a decoding service module 312, a focus management module 313, a focus proxy module 314, a volume synchronization module 315, a volume adjustment service module 316, a dual-core communication module 317, a power management module 318, and the like.

The collaborative playing module 311 may be configured to send an audio of the music application 301 to the decoding service module 312.

The decoding service module 312 may be configured to decode an audio to obtain data of the audio.

The focus management module 313 may be configured to allocate and manage a speaker. The application may obtain a focus of the speaker from the focus management module 313, and after obtaining the focus of the speaker, the application may play an audio through the speaker. When an application occupies the focus of the speaker, if the focus management module 313 receives a request of another application for occupying the speaker, the focus management module 313 notifies the application that the focus of the speaker is lost, and allocates the focus of the speaker to the another application that sends the request. In this way, the application may pause playing of the audio after receiving the notification indicating that the focus of the speaker is lost.

The focus proxy module 314 may stand for the microcontroller unit 102, and when the microcontroller unit 102 occupies the speaker, the focus proxy module 314 may be notified. The focus proxy module 314 may send a request for occupying the speaker to the focus management module 313, so that the focus management module 313 records that the focus proxy module 314 is using the speaker. The focus management module 313 may notify the focus proxy module 314 when receiving a request for occupying the speaker by another application (for example, a call application). The focus proxy module 314 may notify the microcontroller unit 102, and the microcontroller unit 102 may perform an operation of pausing playing of the audio after receiving the notification of the focus proxy module 314. In this way, the focus management module 313 of the application processor 101 is responsible for only focus management of the application processor. When the microcontroller unit 102 occupies the speaker, the focus management module 313 of the application processor 101 cannot notify the microcontroller unit 102. Therefore, the focus proxy module 314 stands for the microcontroller unit, and when the application of the application processor 101 occupies the focus, the focus proxy module 314 may notify the microcontroller unit 101, so that the microcontroller unit 102 performs the operation of pausing playing of the audio.

For example, when the microcontroller unit 102 occupies the speaker, that is, when the focus management module 313 records that the focus proxy module 314 occupies the speaker, if the focus management module 313 receives a request for occupying the speaker from the call application, the focus management module 313 may notify the focus proxy module 314 to stop occupying the speaker, and notify the call application to use the speaker. The call application may play an audio (for example, an incoming call ringtone) through the speaker. The focus proxy module 314 may notify the microcontroller unit 102 to stop using the speaker. After receiving the notification of the focus proxy module 314, the microcontroller unit 102 may record play progress of a played audio. After the application processor 101 receives an input of a user for playing an audio again, the electronic device 100 may continue to play the audio from the recorded play progress. In this way, when the speaker is occupied by another application or module, the microcontroller unit 102 may save the progress of playing the audio, so that the audio continues to be played at the stored play progress when the audio is played next time.

The volume synchronization module 315 may be configured to synchronize a volume value to the microcontroller unit 102 after receiving the volume value sent by the volume adjustment service module 316. Specifically, the volume synchronization module 315 may send the volume value to the volume adjustment service module 324 of the microcontroller unit 102, to adjust a volume of the microcontroller unit 102.

The volume adjustment service module 316 may be configured to change a volume of the application processor 101 of the electronic device 100 based on a volume adjustment operation of the user. The volume adjustment service module 315 may send a changed volume to the volume synchronization module 315.

The dual-core communication module 317 may be configured to transmit data between the application processor 101 and the microcontroller unit 102. For example, first data of a first audio provided by the application processor 101 is sent to the microcontroller unit 102.

The power management module 318 may be configured to control the application processor 101 to switch from a sleep state to a non-sleep state, or control the application processor 101 to switch from a non-sleep state to a sleep state. In some examples, the power management module 318 may control a magnitude of an input current provided for the application processor 101, and adjust a state of the application processor 101. For example, when the application processor 101 is in the sleep state, the input current input to the application processor 101 may be increased, so that the application processor 101 is switched from the sleep state to the non-sleep state.

An application framework layer of the microcontroller unit 102 may include but is not limited to a collaborative playing module 321, a decoding service module 322, a volume synchronization module 323, a volume adjustment service module 324, a dual-core communication module 325, and the like.

The collaborative playing module 321 may be configured to determine whether the microcontroller unit 102 stores a second audio corresponding to an identifier of the first audio, and may be further configured to determine whether the microcontroller unit 102 supports decoding of the first audio. The collaborative playing module 321 may be further configured to: when determining that the microcontroller unit 102 does not store the second audio and does not support decoding of the first audio, notify the decoding service module 312 of the application processor 101 to decode the first audio. The collaborative playing module 321 may be configured to receive the first data that is sent by the application processor 101 and obtained by decoding the first audio, and send the first data to an audio driver module 327. The collaborative playing module 321 may be further configured to obtain a buffered audio based on audio data obtained by the application processor by decoding an audio, for example, obtain the second audio based on the first data.

The collaborative playing module 321 may be configured to: when determining that the microcontroller unit 102 supports decoding of the first audio, notify the decoding service module 322 of the microcontroller unit 102 to decode the first audio.

The decoding service module 322 may be configured to: when the microcontroller unit 102 supports decoding of the first audio, decode the first audio to obtain the first data. The decoding service module 322 may send the first data to the audio driver module 327, and the audio driver module 327 controls the speaker to play the first data. Alternatively, when the second audio includes the first data encoded by the microcontroller unit 102, the decoding service module 322 may be configured to decode the second audio to obtain the first data. It should be noted that, because operating frequencies and memory capacities of the application processor 101 and the microcontroller unit 102 are different, for example, for a difference between the operating frequencies and the memory capacities, refer to the embodiment shown in FIG. 1. Details are not described herein again. A quantity of audio formats supported by the decoding service module 322 for decoding is less than a quantity of audio formats supported by the decoding service module 312 for decoding. Audio formats that are not supported by the decoding service module 322 for decoding may include but are not limited to Ogg, 3GP, ASF, TS, MKV, MP4, WMA, M4A and ADTS.

The volume synchronization module 323 may be configured to synchronize a volume value to the application processor 101 after receiving the volume value sent by the volume adjustment service module 324. Specifically, the volume synchronization module 323 may send the volume value to the volume adjustment service module 316 of the application processor 101, to adjust a volume of the application processor 101.

The volume adjustment service module 324 may be configured to change, based on a volume adjustment operation of the user, a volume used when the microcontroller unit 102 plays an audio. The volume adjustment service module 324 may send a changed volume to the volume synchronization module 323.

The dual-core communication module 325 may be configured to transmit data between the microcontroller unit 102 and the application processor 101. For example, the decoding service module 312 of the application processor 101 may send the first data obtained by decoding the first audio to the dual-core communication module 317, the dual-core communication module 317 may send the first data to the dual-core communication module 325, and then the dual-core communication module 325 sends the first data to the audio driver module 327 through the collaborative playing module 321 and an audio channel module 327, so that the microcontroller unit 102 may implement an operation of controlling the speaker to play the first data obtained by the application processor 101 through decoding.

The system library may include a plurality of functional modules,

A system library of the application processor 101 may include but is not limited to an audio channel module 319. The audio channel module 319 may be configured to transmit audio data to each other between the application framework layer and the kernel layer. For example, the audio channel module 319 may send audio data of the decoding service module 312 to an audio driver module 320 at the kernel layer.

A system library of the microcontroller unit 102 may include but is not limited to the audio channel module 326. The audio channel module 326 may be configured to transmit audio data to each other between the application framework layer and the kernel layer. For example, the audio channel module 319 may send audio data of the decoding service module 322 or the collaborative playing module 321 to the audio driver module 327 at the kernel layer.

Optionally, the system library of the application processor 101 and/or the system library of the microcontroller unit 102 may further include a surface manager (surface manager), a media library (Media Libraries), and the like. The surface manager is configured to manage a display subsystem and provide fusion of 2D and 3D layers for a plurality of applications. The media library supports playback and recording in a plurality of commonly used audio and video formats, and static image files.

The kernel layer is a layer between hardware and software. A kernel layer of the application processor 101 may include but is not limited to the audio driver module 320, a sensor driver module, a display driver module, and the like. The audio driver module 320 may be configured to invoke related hardware (the audio module 105 and the speaker 105A shown in FIG. 1) to implement an audio playing function.

A kernel layer of the microcontroller unit 102 may include but is not limited to the audio driver module 327, a sensor driver module, a display driver module, and the like. The audio driver module 320 may be configured to invoke related hardware (the audio module 105 and the speaker 105A shown in FIG. 1) to implement an audio playing function.

With reference to the diagram of the software architecture shown in FIG. 3A and FIG. 3B, a processing method provided in an embodiment of this application is described by using an example.

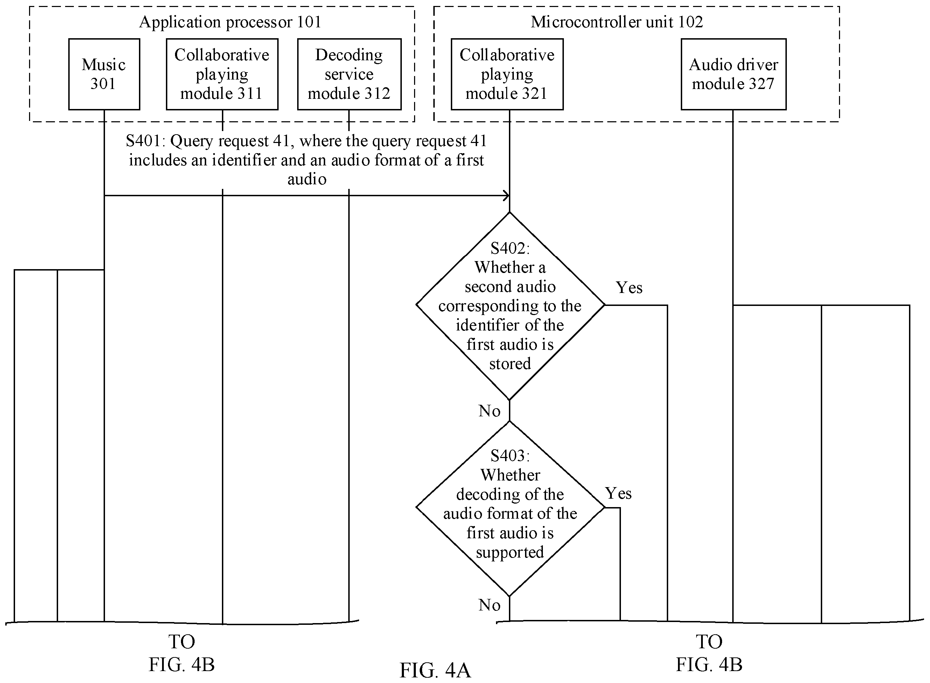

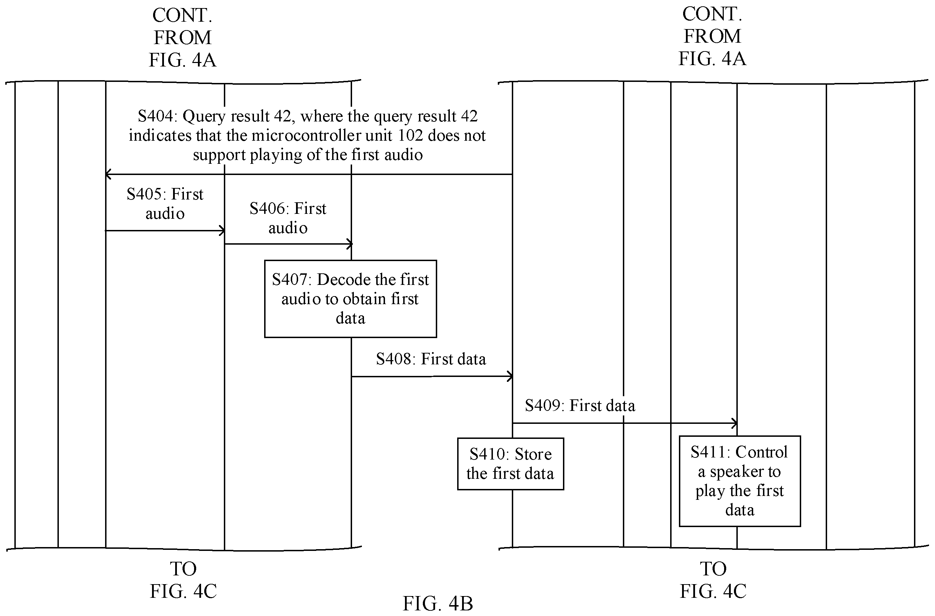

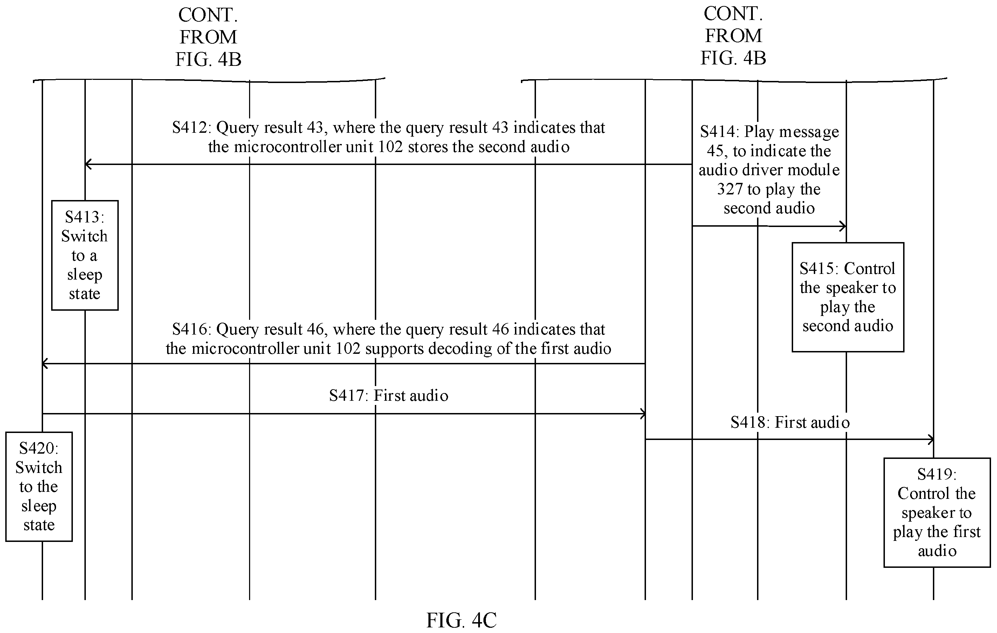

As shown in FIG. 4A to FIG. 4C, an application processor 101 includes a music application 301, a collaborative playing module 311, and a decoding service module 312. A microcontroller unit 102 includes a collaborative playing module 321 and an audio driver module 327.

The application processor 101 is in a non-sleep state. When the application processor 101 controls display of an interface of the music application 301, the interface includes a play control, and the play control may be used to trigger an electronic device 100 to play a first audio. After the application processor 101 receives an input for the play control, the application processor 101 and the microcontroller unit 102 of the electronic device 100 may play the first audio by using the processing method provided in this embodiment of this application. The processing method includes the following steps.

S401: The music application 301 sends a query request 41 to the collaborative playing module 321, where the query request 41 includes an identifier, an audio format, and the like of the first audio.

After receiving the input for the play control, the application processor 101 notifies the music application 301 to play the first audio. The music application 301 may send the query request 41 to the collaborative playing module 321.

S402: The collaborative playing module 321 determines whether the microcontroller unit 102 stores a second audio corresponding to the identifier of the first audio.

The collaborative playing module 321 may determine, based on the identifier of the first audio, whether the microcontroller unit 102 stores the second audio.

When the collaborative playing module 321 determines that the second audio corresponding to the identifier of the first audio to be played is not stored, step S403 is performed. When the collaborative playing module 321 determines that the second audio corresponding to the identifier of the first audio to be played is stored, step S412 is performed.

S403: The collaborative playing module 321 determines whether the microcontroller unit 102 supports decoding of the audio format of the first audio.

The collaborative playing module 321 may obtain an audio format that is supported by a decoding service module 322 for decoding, and determine whether the microcontroller unit 102 supports decoding of the first audio to be played.

S404: The collaborative playing module 321 sends a query result 42 to the music application 301, where the query result 42 indicates that the microcontroller unit 102 does not support playing of the first audio.

S405: The music application 301 sends the first audio to the collaborative playing module 311.

S406: The collaborative playing module 311 sends the first audio to the decoding service module 312.

S407: The decoding service module 312 decodes the first audio to obtain first data.

S408: The decoding service module 312 sends the first data to the collaborative playing module 321.

S409: The collaborative playing module 321 sends the first data to the audio driver module 327.

S410: The collaborative playing module 321 stores the first data.

S411: The audio driver module 327 controls a speaker to play the first data.

S412: The collaborative playing module 321 sends a query result 43 to the music application 301, where the query result 43 indicates that the microcontroller unit 102 stores the second audio.

S413: The music application 301 notifies the application processor 101 to switch to a sleep state.

The music application 301 may send a sleep request message to a power management module 318 after receiving the query result 43, and the power management module 318 may control the application processor 101 to switch to the sleep mode after receiving the sleep request message.

Optionally, after receiving the query result 43, the music application 301 may send a play indication 44 to the collaborative playing module 321, where the play indication 44 indicates the microcontroller unit 102 to play the second audio.

Optionally, after sending the play indication 44, the music application 301 may notify the application processor 101 to switch to the sleep state. Alternatively, after receiving the play indication 44, the collaborative playing module 321 may send play status information to the music application 301, and the music application 301 may notify the application processor 101 to switch to the sleep state only after receiving the play status information.

S414: The collaborative playing module 321 sends a play message 45 to the audio driver module 327, to indicate the audio driver module 327 to play the second audio.

If the second audio includes the first data, the audio driver module 327 of the microcontroller unit 102 may directly read the first data in the second audio, and control the speaker to play the first data. If the second audio includes the encoded first data, the collaborative playing module 321 of the microcontroller unit 102 first notifies the decoding service module 322 to decode the second audio to obtain the first data, and then notifies the audio driver module 327 to control the speaker to play the first data.

S415: The audio driver module 327 controls the speaker to play the second audio.

S416: The collaborative playing module 321 sends a query result 46 to the music application 301, where the query result 46 indicates that the microcontroller unit 102 supports decoding of the first audio.

S417: The music application 301 sends the first audio to the collaborative playing module 321.

After receiving the query result 46, the music application 301 sends the first audio to the collaborative playing module 321.

S418: The collaborative playing module 321 sends the first audio to the audio driver module 327.

S419: The audio driver module 327 plays the first audio.

After the collaborative playing module 321 receives the first audio, the collaborative playing module 321 first notifies the decoding service module 322 to decode the first audio to obtain the first data, and then notifies the audio driver module 327 to control the speaker to play the first data.

S420: The music application 301 notifies the application processor 101 to switch to the sleep state.

The music application 301 may send a sleep request message to the power management module 318 after sending the first audio to the collaborative playing module 321, and the power management module 318 may control the application processor 101 to switch to the sleep mode after receiving the sleep request message.

Specifically, for specific descriptions of some of the foregoing steps, refer to the embodiment shown in FIG. 2A to FIG. 2C. Details are not described herein again.

In a possible implementation, in a process in which the microcontroller unit uses the speaker, if the application processor receives a request of a specified application for using the speaker, the application processor may notify the microcontroller unit to stop using the speaker, and allocate the speaker to the specified application. The specified application may include but is not limited to a call-type application, for example, a call application 302. It should be noted that, in this embodiment of this application, the specified application may be an application for playing an audio without using the microcontroller unit.

With reference to the diagram of the software architecture shown in FIG. 3A and FIG. 3B, the following describes, by using an example, a speaker scheduling method provided in an embodiment of this application.

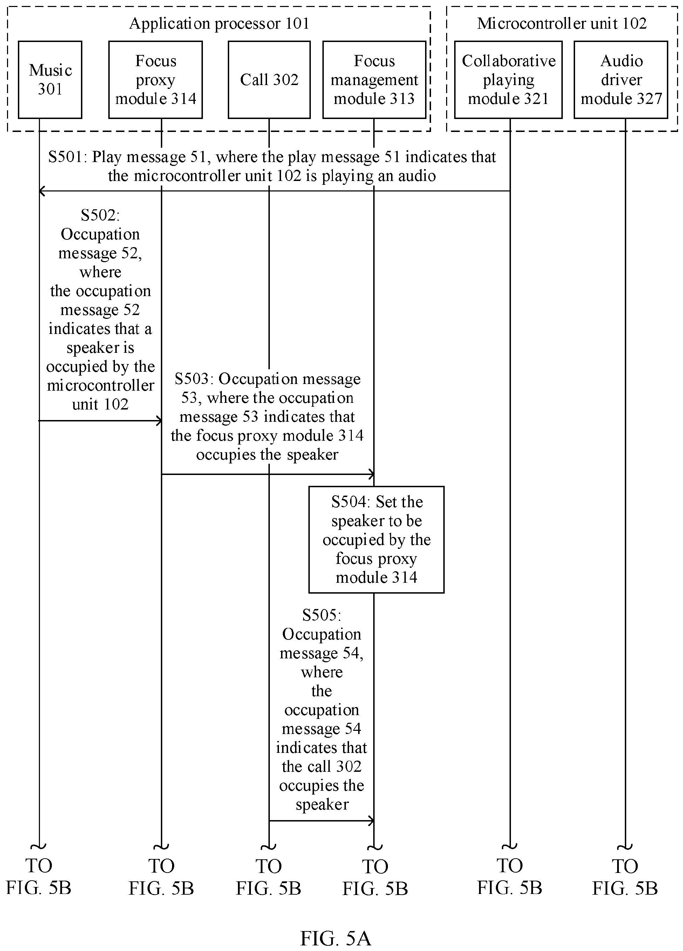

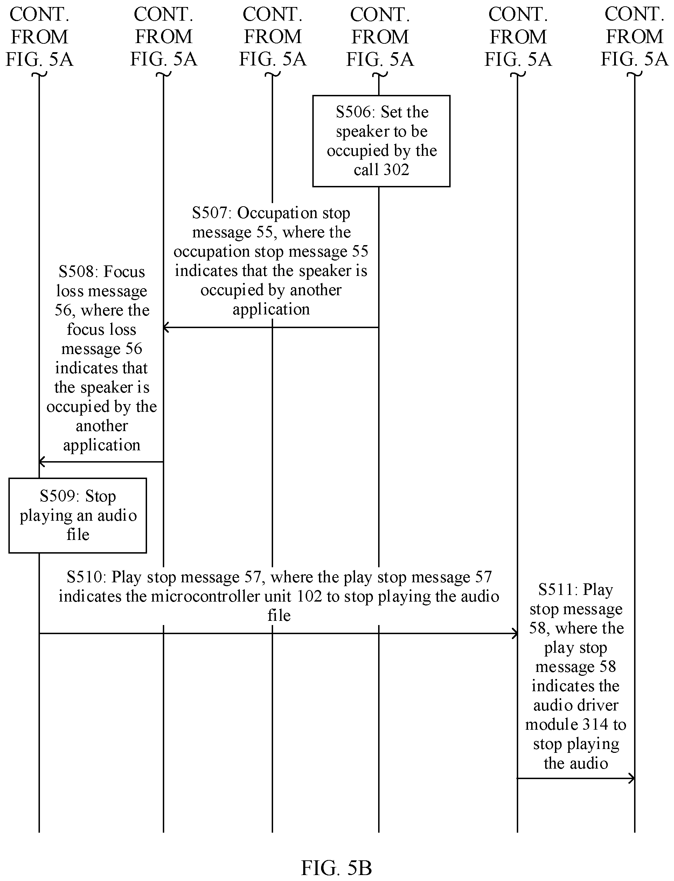

As shown in FIG. 5A and FIG. 5B, the speaker scheduling method includes the following steps.

S501: A collaborative playing module 311 sends a play message 51 to a music application 301, to indicate that a microcontroller unit 102 is playing an audio.

The collaborative playing module 311 may send the play message 51 to the music application 301 when an audio driver module 327 controls a speaker to play an audio.

For example, after step S412 shown in FIG. 4A to FIG. 4C is performed, the audio driver module 327 may notify the collaborative playing module 311 that the audio is being played. After determining that the audio driver module 327 is playing the audio, the collaborative playing module 321 may send the play message 51 to the music application 301, to indicate that the microcontroller unit 102 is playing the audio. For another example, the play message 51 may be the play result 46 shown in FIG. 4A to FIG. 4C.

S502: The music application 301 sends an occupation message 52 to a focus proxy module 314, to indicate that the speaker is occupied by the microcontroller unit 102.

After receiving the play message 51, the music application 301 may send the occupation message 52 to the focus proxy module 314. The occupation message 52 may indicate that the speaker is occupied by the microcontroller unit 102.

S503: The focus proxy module 314 sends an occupation message 53 to a focus management module 313, to indicate that the focus proxy module 314 occupies the speaker.

After receiving the occupation message 52, the focus proxy module 314 may send the occupation message 53 to the focus proxy module 314 to occupy a focus of the speaker.

S504: The focus management module 313 sets the speaker to be occupied by the focus proxy module 314.

S505: A call application 302 sends an occupation request 54 to the focus management module 313, to indicate that the call application 302 occupies the speaker.

The call application 302 may obtain the focus of the speaker from the focus management module 313 when receiving an incoming call from a user.

S506: The focus management module 313 sets the speaker to be occupied by the call application 302.

After receiving the occupation request 54, the focus management module 313 allocates the focus of the speaker to the call application 302, and sets the focus of the speaker to be occupied by the call application 302. After obtaining the focus of the speaker, the call application 302 may play an incoming call ringtone through the speaker.

It may be understood that, because the focus of the speaker is occupied by the call application 302, the music application 301 cannot play an audio through the speaker.

In some embodiments, the focus management module 313 may determine, based on a priority of an application, whether to allocate the speaker to the application. For example, when the focus management module 313 sets the speaker to be occupied by an application A, and receives an occupation request from an application B, the focus management module 313 may determine whether a priority of the application B is higher than a priority of the application A. When determining that the priority of the application B is higher than the priority of the application A, the focus management module 313 notifies the application A to stop occupying the speaker, and allocates the speaker to the application B. When the focus management module 313 determines that the priority of the application B is lower than the priority of the application A, the application occupying the speaker is not changed. In this case, the application B cannot obtain the speaker.

S507: The focus management module 313 sends an occupation stop message 55 to the focus proxy module 314, to indicate that the speaker is occupied by another application.

After the focus of the speaker is occupied by the call application 302, the focus management module 313 may send the occupation stop message 55 to the focus proxy module 314, to indicate that the focus proxy module 314 loses the focus of the speaker and the focus of the speaker is occupied by the another application.

S508: The focus proxy module 314 sends a focus loss message 56 to the music application 301, to indicate that the speaker is occupied by the another application.

The focus proxy module 314 may send the focus loss message 56 to the music application 301 after receiving the occupation stop message 55.

S509: The music application 301 stops playing the first audio.

The music application 301 may perform an operation of stopping playing the first audio, and stop using the speaker.

Optionally, the music application 301 may store play progress of the first audio; and after the call application 302 uses the speaker and returns the focus of the speaker, obtain the focus of the speaker, and notify the microcontroller unit to continue to play the first audio. Alternatively, after receiving an input for playing the first audio (for example, the input for the play control shown in FIG. 4A to FIG. 4C), the music application 301 may continue, based on stored play progress of the first audio, to play the first audio from the play progress present when the focus of the speaker is lost.

S510: The music application 301 sends a play stop message 57 to the collaborative playing module 321, to indicate the microcontroller unit 102 to stop playing the first audio.

S511: The collaborative playing module 321 sends a stop play message 58 to the audio driver module 327, to indicate the audio driver module 327 to stop playing the audio.

It should be noted that the call application 302 is merely an example of an application, and is not limited to the call application. When another application, for example, an alarm clock application, invokes the speaker, the speaker scheduling method shown in FIG. 5A and FIG. 5B may also be performed.

In a possible implementation, after receiving an input for volume adjustment, an application processor of the electronic device 100 may adjust a volume value of the application processor. The application processor of the electronic device 100 may notify the microcontroller unit of an adjusted volume value. After receiving a notification for volume adjustment, the microcontroller unit may adjust a volume value of the microcontroller unit to be the same as the volume value of the application processor. In this way, in a process of playing an audio by the microcontroller unit, the application processor detects the input for volume adjustment, and may notify the microcontroller unit of an adjusted volume, and the microcontroller unit may continue to play the audio by using the adjusted volume.

With reference to the diagram of the software architecture shown in FIG. 3A and FIG. 3B, a volume adjustment method provided in an embodiment of this application is described by using an example.

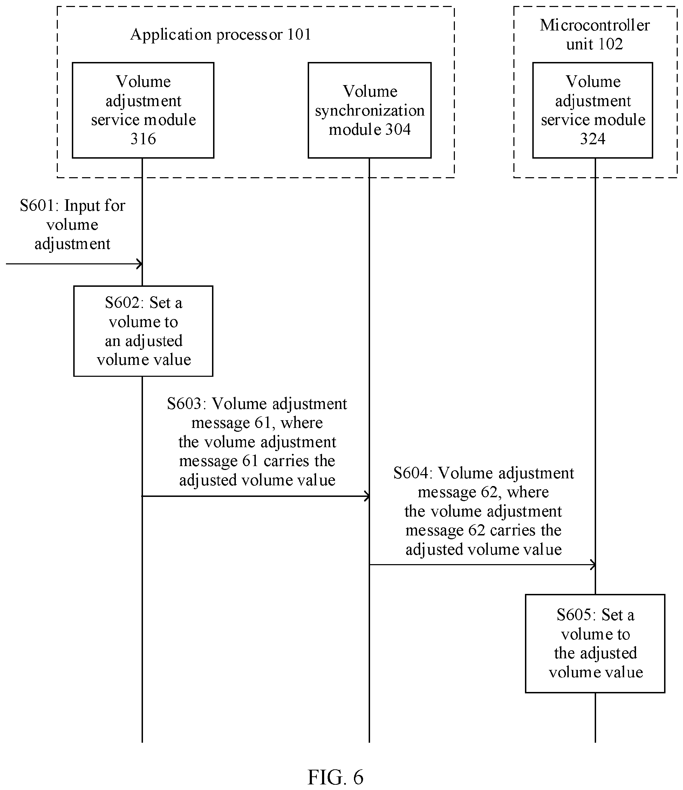

As shown in FIG. 6, an application processor 101 may synchronize a volume to a microcontroller unit 102 through a volume synchronization module 304. The volume adjustment method includes the following steps.

S601: A volume adjustment service module 316 receives an input for volume adjustment.

S602: The volume adjustment service module 316 sets a volume to an adjusted volume value.

The application processor 101 of an electronic device 100 controls a display to display an interface of a music application 301. The interface of the music application 301 further includes a volume setting icon. After receiving an input (for example, a tap) for the volume setting icon, the application processor 101 of the electronic device 100 may control the display to display a volume bar. The input for volume adjustment may be a sliding input for the volume bar.

The volume adjustment service module 316 may set the volume of the application processor 101 to the adjusted volume value based on the input for volume adjustment.

For example, when detecting an input of sliding the volume bar leftward or downward, the application processor 101 of the electronic device 100 may send the input to the volume adjustment service module 316, and the volume adjustment service module 316 may decrease the volume of the application processor 101 based on a sliding distance of the sliding input.

When detecting an input for sliding the volume bar rightward or upward, the application processor 101 of the electronic device 100 may send the input to the volume adjustment service module 316, and the volume adjustment service module 316 may increase the volume of the application processor 101 based on a sliding distance of the sliding input.

S603: The volume adjustment service module 304 sends a volume adjustment message 61 to the volume synchronization module 304, where the volume adjustment message 61 carries the adjusted volume value.

After adjusting the volume value of the application processor 101, the volume adjustment service module 304 may send, to the volume synchronizing module 304, the volume adjustment message 61 carrying the adjusted volume value.

S604: The volume synchronization module 304 sends a volume adjustment message 62 to a volume adjustment service module 324, where the volume adjustment message 62 carries the adjusted volume value.

After receiving the volume adjustment message 61, the volume synchronization module 304 may send the volume adjustment message 62 to the volume adjustment service module 324 of the microcontroller unit 102, to notify the volume adjustment service module 324 to adjust a volume of the microcontroller unit 102, so that a volume value of the microcontroller unit 102 is the same as the volume value of the application processor 101.

S605: The volume adjustment service module 324 sets a volume to the adjusted volume value.

After receiving the volume adjustment message 62, the volume adjustment service module 324 of the microcontroller unit 102 may set the volume value carried in the volume adjustment message 62 as the volume value of the microcontroller unit 102.

Next, for ease of description of subsequent embodiments, a procedure in which an application processor and a microcontroller unit run an application is first described.

Specifically, when the application processor (for example, the application processor 101 shown in FIG. 1) runs an application, program code of the application may be fetched from a memory of the application processor. A programming language of the program code is a programming language (for example, Java/C++) indicated by the application processor. The application processor may compile the program code into computer instructions by using a compiler of the application processor, and execute these computer instructions. Each of these computer instructions belongs to an instruction set of the application processor.

Similarly, when the microcontroller unit (for example, the microcontroller unit 102 shown in FIG. 1) runs an application, program code of the application may be fetched from a memory of the microcontroller unit. A programming language of the program code is a programming language (for example, C/C++) indicated by the microcontroller unit. The microcontroller unit may compile the program code into computer instructions by using a compiler of the microcontroller unit, and execute these computer instructions. Each of these computer instructions belongs to an instruction set of the microcontroller unit.

It should be noted that, because the instruction sets of the microcontroller unit and the application processor are different, in some cases, programming languages are also different. If a same application is installed in the application processor and the microcontroller unit, code of the application stored in the application processor is different from code of the application stored in the microcontroller unit.

It should be further noted that, because the instruction set of the application processor is different from the instruction set of the microcontroller unit, code of the application is also different. The application processor cannot run an application of the microcontroller unit, and the microcontroller unit cannot run an application of the application processor either.

The application run by the application processor may be referred to as an application deployed on the application processor, and may also be referred to as an application of the application processor. An application run by the microcontroller unit may be referred to as an application deployed on the microcontroller unit, and may also be referred to as an application of the microcontroller unit.

It should be noted that, because operating frequencies and memory capacities of the application processor and the microcontroller unit are different, for example, for a difference between the operating frequencies and the memory capacities, refer to the embodiment shown in FIG. 1. Details are not described herein again. The application processor may be configured to run a highly complex computing service and network service, and the like. For example, the application processor may run an application such as a home screen, a call, MeeTime, local screening for atrial fibrillation and premature contractions, and a map. The microcontroller unit 102 may be configured to run a simple computing service. For example, the microcontroller unit 102 may be configured to run an application such as heart rate detection, pressure detection, a daily activity, and music. A programming language of the code of the application run by the application processor is a programming language indicated by the application processor. A programming language of the code of the application run by the microcontroller unit is a programming language indicated by the microcontroller unit.

The electronic device 100 stores a processor identifier of an application, and the processor identifier may indicate whether the electronic device 100 runs the application through the application processor or the microcontroller unit. In other words, when receiving an input for starting an application by a user, an electronic device 100 may determine, based on a processor identifier of the application, whether the application is deployed on the microcontroller unit or the application processor, and then run the application through a processor indicated by the processor identifier. In this way, the electronic device 100 may deploy applications on the microcontroller unit, and set corresponding processor identifiers for these applications. When the user starts an application, the electronic device 100 may quickly determine whether to run the application through the microcontroller unit, to reduce device power consumption. For example, as shown in Table 1, Table 1 shows an example of an application and a corresponding processor identifier.

**Table 1**

| | |
|---|---|
| Application | Processor identifier of the application |
| Exercise application | Microcontroller unit |
| Home screen application | Application processor |
| Information application | Microcontroller unit |
| Music application | Microcontroller unit |
| Call application | Application processor |
| ... | ... |

As shown in Table 1, the table shows some applications and processor identifiers corresponding to the applications. Processor identifiers of the exercise application, the information application, and the music application are the microcontroller unit. Processor identifiers of the home screen application and the call application are the application processor. In other words, when the electronic device 100 displays a home screen, the application processor runs the home screen application, and controls a display to display the home screen. When receiving an input for starting an application, the application processor of the electronic device 100 may determine a processor identifier of the application, and determine whether to notify the microcontroller unit to run the started application. For example, when the application processor of the electronic device 100 controls the display to display the home screen, and receives an input for starting the music application, the application processor determines, based on the processor identifier of the music application, that the microcontroller unit runs the music application. The application processor may send a notification message to the microcontroller unit, where the notification message may carry an identifier (for example, an application name) of the music application. After receiving the notification message of the application processor, the microcontroller unit may run the music application, for example, control the display to display an interface of the music application. For another example, when the application processor of the electronic device 100 controls the display to display the home screen, and receives an input for starting the call application, the application processor determines, based on the processor identifier of the call application, that the application processor runs the call application, and the application processor runs the call application, for example, controls the display to display an interface of the call application.

In another possible implementation, the electronic device 100 includes the application processor and the microcontroller unit. The music application is deployed on the microcontroller unit of the electronic device 100. When displaying the interface of the music application, the microcontroller unit receives an input of playing a first audio of the music application. The microcontroller unit may determine, in response to the input, whether the microcontroller unit supports playing of the first audio. When determining that the microcontroller unit does not support playing of the audio, the microcontroller unit may notify the application processor to process the first audio to obtain first data. The microcontroller unit may obtain the first data of the application processor, and control a speaker to play the first data. The microcontroller unit may play the first audio through the microcontroller unit when determining that the microcontroller unit supports playing of the first audio.

In this way, the electronic device 100 runs the music application and plays the first audio through the microcontroller unit. Because power consumption of the microcontroller unit is lower than power consumption of the application processor, power consumption of playing the audio by the electronic device 100 can be reduced. In addition, the application processor may switch to a sleep state when the microcontroller unit controls the speaker to play a sound, to further reduce power consumption.

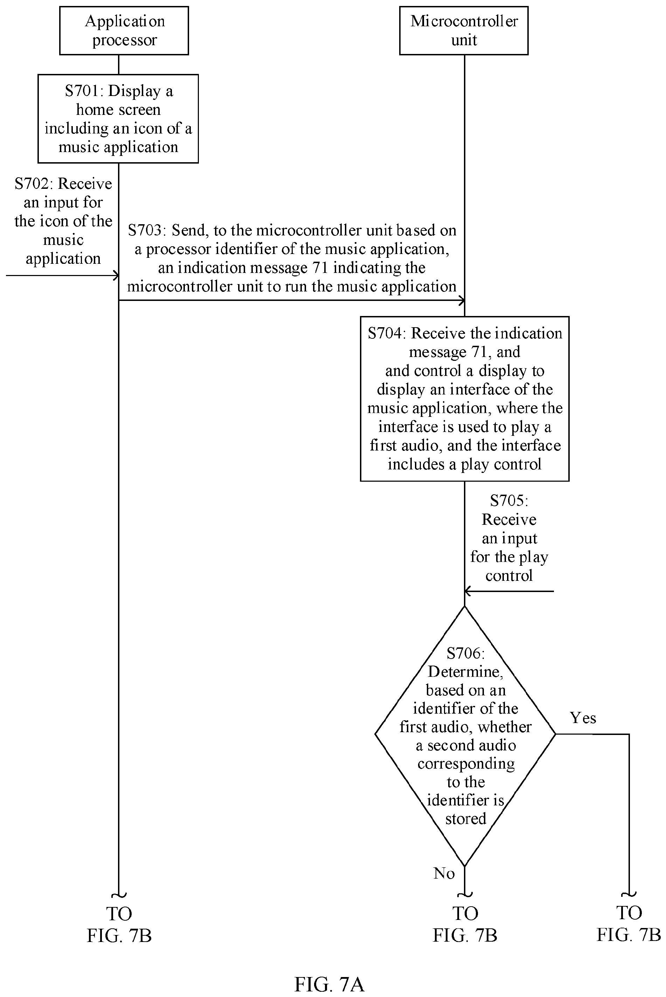

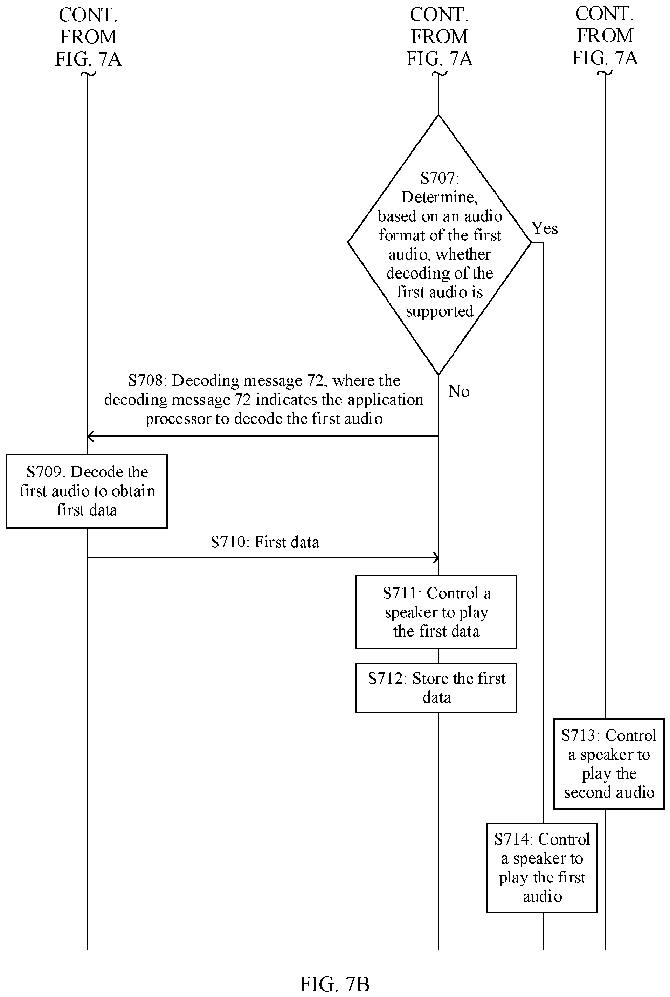

For example, as shown in FIG. 7A and FIG. 7B, the processing method includes the following steps.

S701: An application processor displays a home screen including an icon of a music application.

In this case, the application processor is in a non-sleep state, and the application processor may control a display to display the home screen including the icon of the music application.

S702: The application processor receives an input for the icon of the music application.

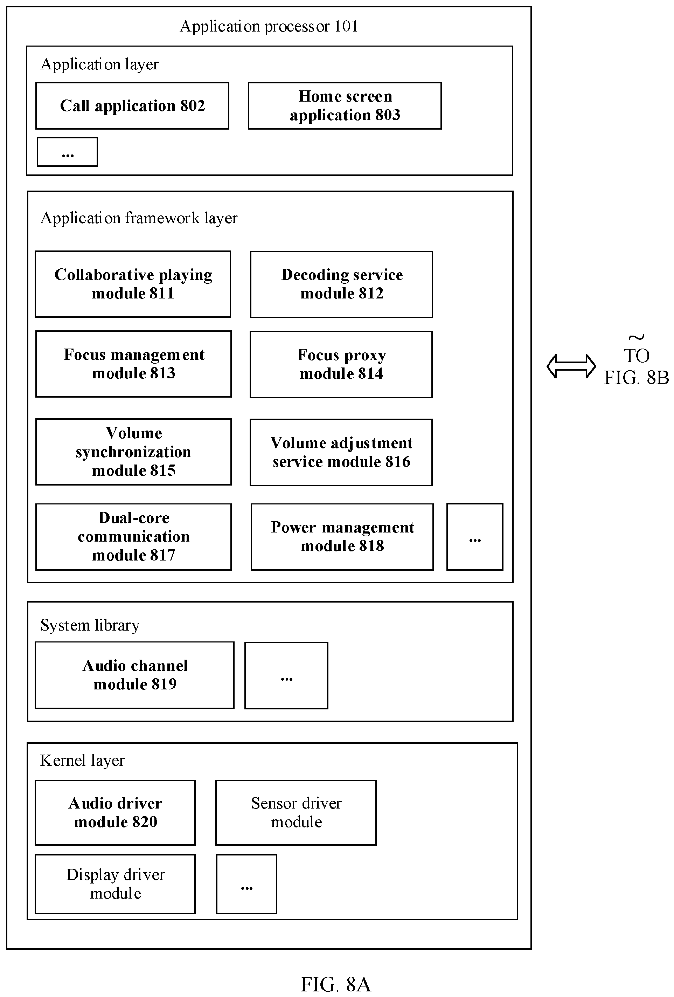

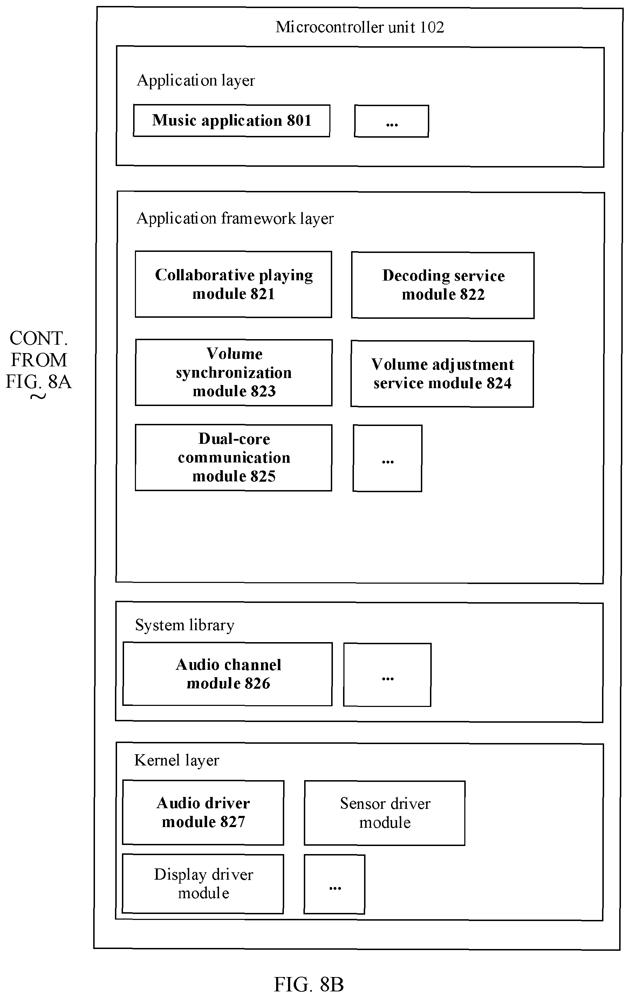

The application processor may obtain the input for the icon of the music application. For specific descriptions of the input, refer to the embodiment shown in FIG. 2A to FIG. 2C. Details are not described herein again. It should be noted that the music application may be any application used to play an audio. The application may be installed in an electronic device 100 at delivery, or the application may be downloaded by a user through a network. For example, the music application may be a music application 801 shown in FIG. 8A and FIG. 8B.

S703: The application processor sends, to a microcontroller unit based on a processor identifier of the music application, an indication message 71 indicating the microcontroller unit to run the music application.

The application processor may determine, based on an identifier of the music application, that the music application is deployed on the microcontroller unit. The application processor may send the indication message 71 to the microcontroller unit, where the indication message 71 may carry the identifier of the music application, and indicate the microcontroller unit to run the music application.

The application processor may further switch from the non-sleep state to a sleep state after sending the indication message 71 to the microcontroller unit.

S704: The microcontroller unit receives the indication message 71, and controls the display to display an interface of the music application, where the interface is used to play a first audio, and the interface includes a play control.

After receiving the indication message 71, the microcontroller unit may control the display to display the interface of the music application. The interface of the music application may include the play control, and the play control may be used to trigger the electronic device 100 to play the first audio.

Optionally, the interface of the music application may further include song information of the first audio, and the song information may include but is not limited to a song name, a singer name, and the like.

S705: The microcontroller unit receives an input for the play control.

The play control may be used to trigger the electronic device 100 to play the first audio. The microcontroller unit may receive the input for the play control, and perform step S706 in response to the input.

In some examples, the microcontroller unit may obtain, through a sensor driver module (for example, a touch sensor module), location information of a screen touch point touched by the user, and the microcontroller unit may determine, based on the location information of the screen touch point, that the input is the input for the play control.

In some other examples, not limited to the foregoing step S701 to step S705, the application processor in the non-sleep state may send a play request to the microcontroller unit in response to a voice instruction used by the user to play the first audio, where the play request indicates the microcontroller unit to play the first audio. After receiving the play request, the microcontroller unit may perform step S706. Before receiving the voice instruction of the user, the application processor may control an interface displayed on the display not to be the interface of the music application. In other words, when controlling the display to display any interface, the application processor may send the play request to the microcontroller unit in response to the voice instruction used by the user to play the first audio. Optionally, after sending the play request to the microcontroller unit, the application processor may switch from the non-sleep state to the sleep state.

Alternatively, when the electronic device 100 displays an interface of a file management application, the interface includes an audio option corresponding to one or more stored audios, the one or more audios include the first audio, and the one or more audio options include a first audio option. After receiving an input of the user for the first audio option, the electronic device 100 may perform step S706.

In conclusion, after receiving the input for playing the first audio by using the music application, the microcontroller unit may perform step S706.

S706: The microcontroller unit determines, based on an identifier of the first audio, whether a second audio corresponding to the identifier is stored.

When the microcontroller unit determines that the second audio corresponding to the identifier of the first audio to be played is not stored, step S707 is performed. When the microcontroller unit determines that the second audio corresponding to the identifier of the first audio to be played is stored, step S713 is performed.

S707: The microcontroller unit determines, based on an audio format of the first audio, whether decoding of the first audio is supported.

When the microcontroller unit determines that the microcontroller unit does not support decoding of the first audio to be played, step S708 is performed. When the microcontroller unit determines that the microcontroller unit supports decoding of the first audio to be played, step S714 is performed.

It should be noted that, this is not limited to a sequence of first determining whether the microcontroller unit stores the second audio corresponding to the identifier of the first audio and then determining, when the microcontroller unit does not store the second audio, that the microcontroller unit does not support decoding of the audio format of the first audio. The microcontroller unit may first determine whether the microcontroller unit supports decoding of the audio format of the first audio, and then determine, when the microcontroller unit does not support decoding of the audio format of the first audio, whether the microcontroller unit stores the second audio corresponding to the identifier of the first audio. Alternatively, the microcontroller unit may simultaneously determine whether the microcontroller unit supports decoding of the audio format of the first audio and whether the microcontroller unit stores the second audio corresponding to the identifier of the first audio. This is not limited in this embodiment of this application.

In some embodiments, the microcontroller unit may determine only whether the second audio is stored. Alternatively, the microcontroller unit may determine only whether decoding of the first audio is supported.

S708. The microcontroller unit sends a decoding message 72 to the application processor, where the decoding message 72 indicates the application processor to decode the first audio.

The microcontroller unit may send the decoding message 72 to the application processor when determining that playing of the first audio is not supported, that is, the second audio is not stored and decoding of the first audio is not supported. The decoding message 72 may indicate the application processor to decode the first audio. It may be understood that the decoding message 72 may be further used to wake up the application processor, so that the application processor switches from the sleep state to the non-sleep state.

S709: The application processor decodes the first audio to obtain first data.

After receiving the decoding message 72, the application processor may switch from the sleep state to the non-sleep state, and then decode the first audio by using a decoding algorithm, to obtain the first data. A parameter of the decoding algorithm may be a specified parameter or a parameter provided by the music application. In this way, the electronic device 100 may implement a decoding operation of the first audio by using the parameter provided by the third-party music application.

S710: The application processor sends the first data to the microcontroller unit.

After obtaining the first data through decoding, the application processor may transmit the first data to the microcontroller unit.

Optionally, the application processor may switch from the non-sleep state to the sleep state after transmitting the first data to the microcontroller unit.

S711: The microcontroller unit controls a speaker to play the first data.

In some examples, the microcontroller unit may transmit the first data to the audio module 105 shown in FIG. 1, and jointly implement playing of the first data with the audio module 105 and the speaker 105A.

S712: The microcontroller unit stores the first data.

The microcontroller unit may store the first data to obtain the second audio. Optionally, the microcontroller unit may encode the first data by using a supported encoding scheme, to obtain the second audio in a specified audio format. The specified audio format is a first audio format supported by the microcontroller unit. For details, refer to the embodiment shown in FIG. 1. Details are not described herein again. In this way, storage space of the electronic device 100 can be saved by compressing the first data through encoding, so that the electronic device 100 can store more second audio.

S713: The microcontroller unit controls the speaker to play the second audio.

After determining that the second audio corresponding to the identifier of the first audio is stored, the microcontroller unit may control the speaker to play the second audio.

S714: The microcontroller unit controls the speaker to play the first audio.

When determining that decoding of the first audio is supported, the microcontroller unit may decode the first audio to obtain the first data, and control the speaker to play the first data.

For detailed descriptions of step S706, step S707, and step S711 to step S714, refer to the embodiment shown in FIG. 2A to FIG. 2C. Details are not described herein again.

In some embodiments, after decoding the first audio to obtain the first data, the application processor may directly control the speaker to play the first data, and send the first data to the microcontroller unit, to indicate the microcontroller unit to store the first data.

With reference to the hardware structure of the electronic device 100 shown in FIG. 1, the following describes an example of another software architecture of an application processor and a microcontroller unit.

For example, as shown in FIG. 8A and FIG. 8B, an application layer of a microcontroller unit 102 may include but is not limited to an application such as a music application 801. An application layer of an application processor 101 may include but is not limited to applications such as a call application 802 and a home screen application 803. The music application 801 may be configured to play a first audio. The call application 802 may be configured to answer a call. The home screen application 803 may be configured to display an icon of an application.

An application framework layer of the application processor 101 may include but is not limited to a collaborative playing module 811, a decoding service module 812, a focus management module 813, a focus proxy module 814, a volume synchronization module 815, a volume adjustment service module 816, a dual-core communication module 817, a power management module 818, and the like. An application framework layer of the microcontroller unit 102 may include but is not limited to a collaborative playing module 821, a decoding service module 822, a volume synchronization module 823, a volume adjustment service module 824, a dual-core communication module 825, and the like.

A system library of the application processor 101 may include an audio channel module 819. A system library of the microcontroller unit 102 may include an audio channel module 826.

A kernel layer of the application processor 101 may include but is not limited to an audio driver module 820, a sensor driver module, and a display driver module. A kernel layer of the microcontroller unit 102 may include but is not limited to an audio driver module 827, a sensor driver module, and a display driver module.

Specifically, for descriptions of the application framework layers, the system libraries, and the kernel layers of the application processor 101 and the microcontroller unit 102, refer to the embodiment shown in FIG. 3A and FIG. 3B. Details are not described herein again.

With reference to the diagram of the software architecture shown in FIG. 8A and FIG. 8B, the following describes, by using an example, a processing method provided in an embodiment of this application.

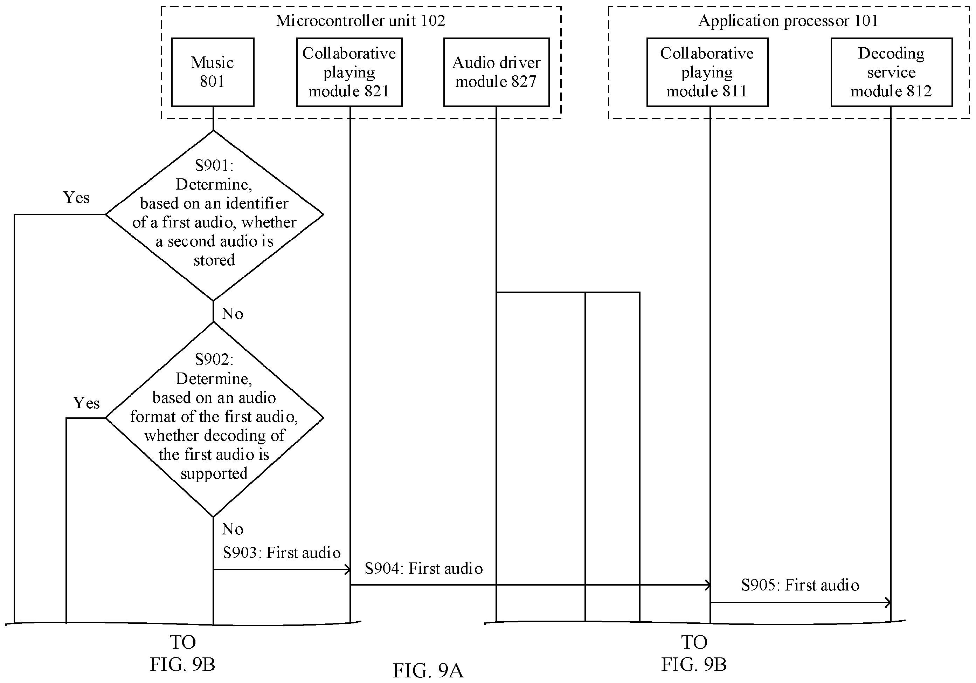

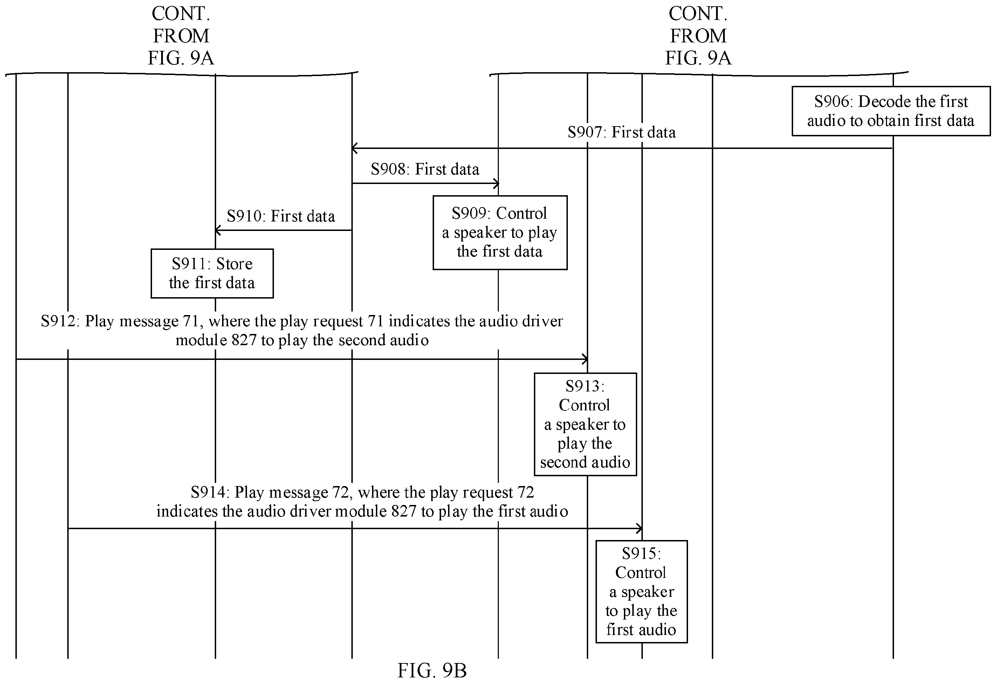

As shown in FIG. 9A and FIG. 9B, an application processor 101 includes a collaborative playing module 811 and a decoding service module 812. A microcontroller unit 102 includes a music application 801, a collaborative playing module 821, and an audio driver module 827.

The application processor 101 is in a non-sleep state, and the application processor 101 may control a display to display a home screen including an icon of the music application 801. The application processor 101 may receive an input for the icon of the music application 801, and in response to the input, the application processor notifies, based on a processor identifier of the music application 801, the microcontroller unit 102 to run the music application 801. The application processor may further switch from the non-sleep state to a sleep state after notifying the microcontroller unit 102 to run the music application 801.

After receiving the notification of the application processor 101, the microcontroller unit 102 may control the display to display an interface of the music application 801, where the interface is used to play a first audio, and the interface includes a play control. The microcontroller unit 102 may receive an input for the play control, and play the first audio by using the processing method provided in this embodiment of this application. Alternatively, the application processor 101 in the non-sleep state may indicate, in response to a voice instruction of a user for playing the first audio, the microcontroller unit 102 to play the first audio by using the processor method provided in this embodiment of this application. The processing method includes the following steps.

S901: The music application 801 determines, based on an identifier of the first audio, whether a second audio is stored.

When the music application 801 determines that the second audio corresponding to the identifier of the first audio is stored, step S914 is performed. When the music application 801 determines that the second audio corresponding to the identifier of the first audio is not stored, step S902 is performed.

S902: The music application 801 determines, based on an audio format of the first audio, whether the microcontroller unit supports decoding of the first audio.

When the music application 801 determines that the microcontroller unit 102 does not support decoding of the first audio to be played, step S903 is performed. When the music application 801 determines that decoding of the first audio to be played is supported, step S914 is performed.

S903: The music application 801 sends the first audio to the collaborative playing module 821.

The music application 801 determines that the second audio corresponding to the identifier of the first audio to be played is not stored and decoding of the first audio to be played is not supported, and sends the first audio to the collaborative playing module 821.

S904: The collaborative playing module 821 sends the first audio to the collaborative playing module 811.

After receiving the first audio provided by the music application 801, the collaborative playing module 821 of the microcontroller unit 102 may send the first audio to the collaborative playing module 811 of the application processor 101. When receiving the first audio, the application processor 101 switches from the sleep state to the non-sleep state.

S905: The collaborative playing module 811 sends the first audio to the decoding service module 812.

S906: The decoding service module 812 decodes the first audio to obtain first data.

S907: The decoding service module 812 sends the first data to the collaborative playing module 821.

S908: The collaborative playing module 821 sends the first data to the audio driver module 827.

S909: The audio driver module 827 controls a speaker to play the first data.

S910: The collaborative playing module 821 sends the first data to the music application 801.

S911: The music application 801 stores the first data.

S912: The music application 801 sends a play message 71 to the audio driver module 827, where the play message 71 indicates the audio driver module 827 to play the second audio.

When determining that the second audio corresponding to the identifier of the first audio to be played is stored, the music application 801 sends the play message 71 to the audio driver module 827.

S913: The audio driver module 827 controls the speaker to play the second audio.

S914: The music application 801 sends a play message 72 to the audio driver module 827, where the play message 72 indicates the audio driver module 827 to play the first audio.

When determining that decoding of the first audio is supported, the music application 801 sends the play message 72 to the audio driver module 827.

S915: The audio driver module 827 controls the speaker to play the first audio.

After receiving the play message 72, the audio driver module 827 plays the first audio.

Specifically, for specific descriptions of the foregoing steps, refer to the embodiment shown in FIG. 7A and FIG. 7B. Details are not described herein again.

In a possible implementation, in a process in which the microcontroller unit uses the speaker, if the application processor receives a request of a specified application for using the speaker, the application processor may notify the microcontroller unit to stop using the speaker, and allocate the speaker to the specified application. The specified application may include but is not limited to a call-type application, for example, a call application 302. It should be noted that, in this embodiment of this application, the specified application may be an application for playing an audio without using the microcontroller unit.

In a possible implementation, the application processor includes a focus proxy module. When the microcontroller unit of the electronic device 100 uses the speaker, the focus proxy module of the application processor may obtain a focus of the speaker from a focus management module. The focus management module may notify the focus proxy module when the focus of the speaker is occupied by another application. The focus proxy module may notify the microcontroller unit, and the microcontroller unit may perform an operation of pausing playing of the audio after receiving the notification of the focus proxy module. In this way, the focus management module of the application processor is responsible for only focus management of the application processor. When the microcontroller unit occupies the speaker, the focus management module of the application processor cannot notify the microcontroller unit. Therefore, the focus proxy module stands for the microcontroller unit, and when the application of the application processor occupies the focus, the focus proxy module may notify the microcontroller unit, so that the microcontroller unit performs the operation of pausing playing of the audio.

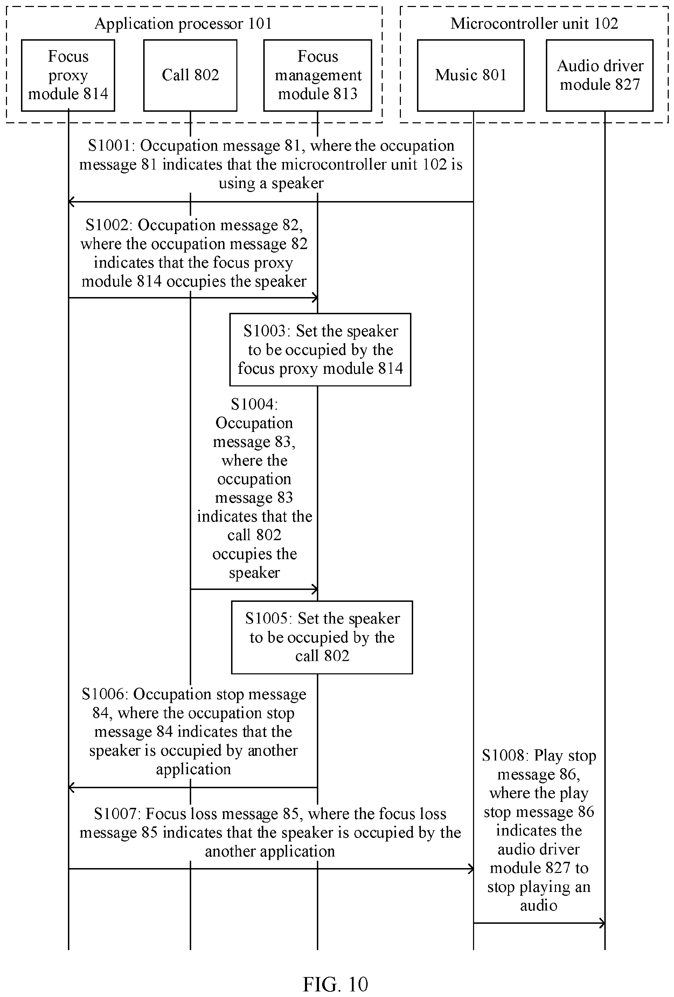

With reference to the diagram of the software architecture shown in FIG. 8A and FIG. 8B, a speaker scheduling method provided in an embodiment of this application is described by using an example. As shown in FIG. 10, the method includes the following steps.

S1001: A music application 801 sends an occupation message 81 to a focus proxy module 814, to indicate that a microcontroller unit 102 is using a speaker.

The music application 801 may send the occupation message 81 to the focus proxy module 814 when the microcontroller unit 102 plays a first audio.

S1002: The focus proxy module 814 sends an occupation message 82 to a focus management module 813, to indicate that the focus proxy module 814 occupies the speaker.

S1003: The focus management module 813 sets the speaker to be occupied by the focus proxy module 814.

S1004: A call application 802 sends an occupation request 83 to the focus management module 813, to indicate that the call application 802 occupies the speaker.

It may be understood that, after obtaining a focus of the speaker, the call application 802 may play an incoming call ringtone through the speaker.

S1005: The focus management module 813 sets the speaker to be occupied by the call application 802.

In some embodiments, the focus management module 813 may determine, based on a priority of an application, whether to allocate the speaker to the application. For example, when the focus management module 813 sets the speaker to be occupied by an application A, and receives an occupation request from an application B, the focus management module 813 may determine whether a priority of the application B is higher than a priority of the application A. When determining that the priority of the application B is higher than the priority of the application A, the focus management module 813 notifies the application A to stop occupying the speaker, and allocates the speaker to the application B. When the focus management module 813 determines that the priority of the application B is lower than the priority of the application A, the application occupying the speaker is not changed. In this case, the application B cannot obtain the speaker.

S1006: The focus management module 813 sends an occupation stop message 84 to the focus proxy module 814, to indicate that the speaker is occupied by another application.

S1007: The focus proxy module 814 sends a focus loss message 85 to the music application 801, to indicate that the speaker is occupied by the another application.

S1008: The music application 801 sends a play stop message 86 to an audio play driver 827, to indicate the audio driver module 827 to stop playing an audio.

Specifically, for detailed descriptions of step S1002 to step S1008, refer to the embodiment shown in FIG. 5A and FIG. 5B. Details are not described herein again.

In a possible implementation, when determining that playing of the first audio is not supported, the microcontroller unit may notify the application processor to decode and play the first audio. The microcontroller unit 102 may alternatively occupy the focus of the speaker provided by the focus management module through the focus proxy module. **In** this way, because the music application is deployed on the microcontroller unit, when the microcontroller unit decodes and plays the first audio through the application processor, the focus proxy module may be used to occupy the focus of the speaker of the focus management module of the application processor. After the focus of the speaker is occupied by another application of the application processor, the microcontroller unit notifies the application processor to pause playing of the first audio.

Specifically, with reference to the software architecture shown in FIG. 8A and FIG. 8B, after receiving an input of a user for playing the first audio, the music application 801 may notify the focus proxy module 814. The focus proxy module 814 may obtain the focus of the focus management module 813. After the focus of the speaker of the focus management module 813 is occupied by another application, the focus proxy module 814 may notify the music application 801. For details, refer to the foregoing step S1002 to step S1007. Details are not described herein again.

When the application processor 101 decodes and plays the first audio, a decoding service module 812 of the application processor 101 may receive the first audio provided by the music application 801, and decode the first audio to obtain first data. The decoding service module 812 may send the first data to the audio driver module 802, and the audio driver module 802 may control the speaker to play the first data.

After receiving a notification message indicating that the focus is lost, the music application 801 may notify the application processor 101 to stop playing the first audio. Specifically, the music application 801 may notify the decoding service module 812 to stop decoding, and notify the audio driver module 802 to stop playing the audio.

In a possible implementation, after receiving an input for volume adjustment, the microcontroller unit of the electronic device 100 may adjust a volume value of the microcontroller unit. The microcontroller unit of the electronic device 100 may notify the application processor of an adjusted volume value. After receiving a notification for volume adjustment, the application processor may adjust a volume value of the application processor to be the same as the volume value of the microcontroller unit. In this way, in a process of playing an audio by the microcontroller unit, the microcontroller unit detects the input for volume adjustment, and may notify the application processor of an adjusted volume, and the application processor may play an audio, for example, an alert tone, by using the adjusted volume.

With reference to the diagram of the software architecture shown in FIG. 8A and FIG. 8B, a volume adjustment method provided in an embodiment of this application is described by using an example.

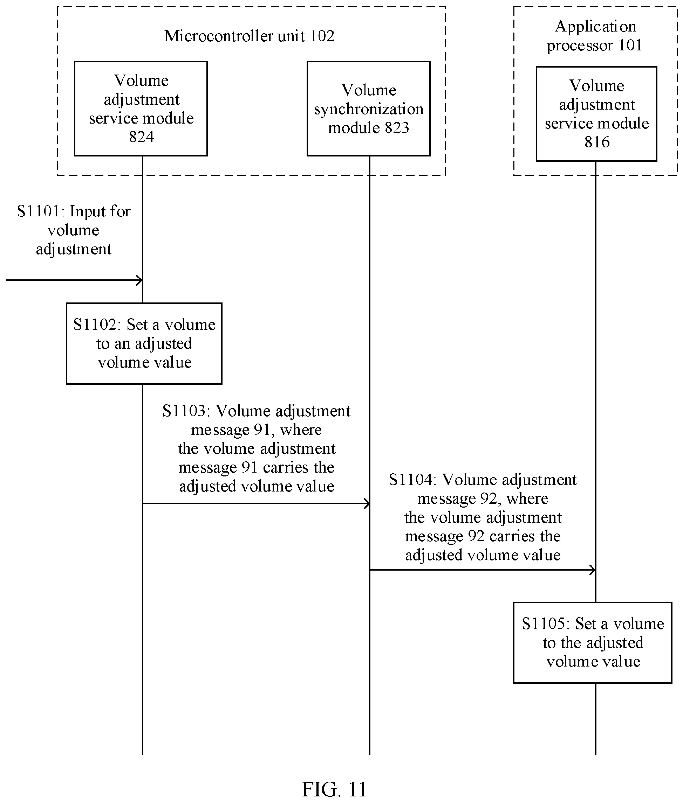

As shown in FIG. 11, a microcontroller unit 102 may synchronize a volume to an application processor 101 through a volume synchronization module 823. The volume adjustment method includes the following steps.

S1101: A volume adjustment service module 824 receives an input for volume adjustment.

S1102: The volume adjustment service module 824 sets a volume to an adjusted volume value.

The microcontroller unit 102 of an electronic device 100 controls a display to display an interface of a music application 801. The interface of the music application 801 further includes a volume setting icon. After receiving an input (for example, a tap) for the volume setting icon, the microcontroller unit 102 of the electronic device 100 may control the display to display a volume bar. The input for volume adjustment may be a sliding input for the volume bar.

The volume adjustment service module 824 may set the volume of the microcontroller unit 102 to the adjusted volume value based on the input for volume adjustment.

For example, when detecting an input of sliding the volume bar leftward or downward, the microcontroller unit 102 of the electronic device 100 may send the input to the volume adjustment service module 824, and the volume adjustment service module 824 may decrease the volume of the microcontroller unit 102 based on a sliding distance of the sliding input.

When detecting an input for sliding the volume bar rightward or upward, the microcontroller unit 102 of the electronic device 100 may send the input to the volume adjustment service module 824, and the volume adjustment service module 824 may increase the volume of the microcontroller unit 102 based on a sliding distance of the sliding input.

S1103: The volume adjustment service module 824 sends a volume adjustment message 91 to the volume synchronization module 823, where the volume adjustment message 91 carries the adjusted volume value.

After adjusting the volume value of the microcontroller unit 102, the volume adjustment service module 824 may send, to the volume synchronization module 823, the volume adjustment message 91 carrying the adjusted volume value.

S1104: The volume synchronization module 823 sends a volume adjustment message 92 to a volume adjustment service module 816, where the volume adjustment message 92 carries the adjusted volume value.

After receiving the volume adjustment message 91, the volume synchronization module 823 may send the volume adjustment message 92 to the volume adjustment service module 816 of the application processor 101, to notify the volume adjustment service module 816 to adjust a volume of the application processor 101, so that a volume value of the application processor 101 is the same as the volume value of the microcontroller unit 102.

S1105: The volume adjustment service module 816 sets the volume to the adjusted volume value.

After receiving the volume adjustment message 92, the volume adjustment service module 816 of the application processor 101 may set the volume value carried in the volume adjustment message 92 as the volume value of the application processor 101.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A processing method, applied to an electronic device, wherein the electronic device comprises an application processor, a microcontroller unit, and a speaker, and the method comprises:
receiving, by the application processor, a first input, wherein the first input is used to trigger the electronic device to play a first audio by using a first application;
sending, by the application processor, a first message to the microcontroller unit in response to the first input;
when the microcontroller unit determines, based on the first message, that the microcontroller unit supports playing of the first audio, sending, by the microcontroller unit, a second message to the application processor; and
controlling, by the microcontroller unit, the speaker to play the first audio, and switching, by the application processor, to a sleep state, after the microcontroller unit sends the second message to the application processor.

2. The method according to claim 1, wherein the method further comprises:
when the microcontroller unit determines, based on the first message, that the microcontroller unit does not support playing of the first audio, sending, by the microcontroller unit, a third message to the application processor;
decoding, by the application processor, the first audio in response to the third message, to obtain the first data;
sending, by the application processor, the first data to the microcontroller unit; and
controlling, by the microcontroller unit, the speaker to play the first data.

3. The method according to claim 1 or 2, wherein the first message comprises a first audio format of the first audio, and that the microcontroller unit determines, based on the first message, that the microcontroller unit supports playing of the first audio specifically comprises:
when determining, based on the first audio format, that the microcontroller unit supports decoding of the first audio in the first audio format, determining, by the microcontroller unit, that the microcontroller unit supports playing of the first audio.

4. The method according to claim 3, wherein the controlling, by the microcontroller unit, the speaker to play the first audio, and switching, by the application processor, to a sleep state, after the microcontroller unit sends the second message to the application processor specifically comprises:
sending, by the application processor, the first audio to the microcontroller unit in response to the second message, wherein the second message indicates that the microcontroller unit supports decoding of the first audio;
after receiving the first audio, decoding, by the microcontroller unit, the first audio to obtain the first data;
controlling, by the microcontroller unit, the speaker to play the first data; and
after completing sending of the first audio, switching, by the application processor, to the sleep state.

5. The method according to any one of claims 1 to 4, wherein the first message comprises an identifier of the first audio, and that the microcontroller unit determines, based on the first message, that the microcontroller unit supports playing of the first audio specifically comprises:
when determining, based on the identifier of the first audio, that a second audio corresponding to the identifier of the first audio is stored, determining, by the microcontroller unit, that the microcontroller unit supports playing of the first audio.

6. The method according to claim 5, wherein the second audio comprises the first data obtained through decoding, and the controlling, by the microcontroller unit, the speaker to play the first audio specifically comprises:
controlling, by the microcontroller unit, the speaker to play the second audio indicated by the identifier of the first audio.

7. The method according to claim 5, wherein the second audio comprises the first data encoded in a second audio format, the microcontroller unit supports decoding of the second audio in the second audio format, and the controlling, by the microcontroller unit, the speaker to play the first audio specifically comprises:
decoding, by the microcontroller unit, the second audio indicated by the identifier of the first audio, to obtain the first data; and
controlling, by the microcontroller unit, the speaker to play the first data.

8. The method according to any one of claims 1 to 7, wherein after the microcontroller unit sends the second message to the application processor, the method further comprises:
after receiving the second message, sending, by the application processor to the microcontroller unit, a fourth message indicating the microcontroller unit to play the first audio; and
after receiving the fourth message, controlling, by the microcontroller unit, the speaker to play the first audio.

9. The method according to claim 8, wherein after the microcontroller unit receives the fourth message, the method further comprises:
sending, by the microcontroller unit, a fifth message to the application processor, wherein the fifth message indicates the application processor to switch to the sleep state;
the switching, by the application processor, to the sleep state specifically comprises:
switching, by the application processor, to the sleep state in response to the fifth message.

10. The method according to any one of claims 1 to 9, wherein when the microcontroller unit controls the speaker to play an audio, the method further comprises:
detecting, by the application processor, a first request of a second application, wherein the first request is used to request use of the speaker; and
sending, by the application processor, a sixth message to the microcontroller unit, wherein the sixth message indicates the microcontroller unit to stop playing the audio.

11. The method according to claim 10, wherein a priority of the second application is higher than a priority of the first application.

12. The method according to any one of claims 1 to 11, wherein in a process of playing the audio by the microcontroller unit, the method further comprises:
receiving, by the application processor, an input for volume adjustment, and setting a volume value of the application processor to an adjusted volume value;
sending, by the application processor, the adjusted volume value to the microcontroller unit; and
setting, by the microcontroller unit, a volume value of the microcontroller unit to the adjusted volume value.

13. The method according to any one of claims 1 to 12, wherein when the electronic device is in a state of continuously playing audios and the microcontroller unit determines, based on the first message, that the microcontroller unit supports playing of the first audio, and the method further comprises:
after completing playing of the first audio, notifying, by the microcontroller unit, the application processor to switch to a non-sleep state;
after switching to the non-sleep state, sending, by the application processor, a seventh message to the microcontroller unit, wherein the first audio and the third audio belong to a same playlist; and
determining, by the microcontroller unit based on the seventh message, whether the microcontroller unit supports playing of the third audio.

14. A processing method, applied to an electronic device, wherein the electronic device comprises an application processor, a microcontroller unit, and a speaker, and the method comprises:
receiving, by the microcontroller unit, a first input, wherein the first input is used to trigger the electronic device to play a first audio by using a first application;
determining, by the microcontroller unit in response to the first input based on first information of the first audio, whether the microcontroller unit supports playing of the first audio; and
when the microcontroller unit determines, based on the first information, that the microcontroller unit supports playing of the first audio, controlling, by the microcontroller unit, the speaker to play the first audio.

15. The method according to claim 14, wherein before the receiving, by the microcontroller unit, a first input, the method further comprises:
controlling, by the application processor, a display to display a first interface, wherein the first interface comprises an icon of the first application;
receiving, by the application processor, a second input for the icon of the first application;
sending, by the application processor, a first instruction to the microcontroller unit in response to the second input, wherein the first instruction instructs the microcontroller unit to display an interface of the first application;
after sending the first instruction, switching, by the application processor, to a sleep state; and
controlling, by the microcontroller unit in response to the first instruction, the display to display the interface of the first application, wherein the interface of the first application comprises a first control, the first control is used to trigger the electronic device to play the first audio, and the first input is an input for the first control.

16. The method according to claim 14 or 15, wherein the method further comprises:
when the microcontroller unit determines, based on the first information, that the microcontroller unit does not support playing of the first audio, sending, by the microcontroller unit, a first message to the application processor;
decoding, by the application processor, the first audio in response to the first message, to obtain the first data;
sending, by the application processor, the first data to the microcontroller unit; and
controlling, by the microcontroller unit, the speaker to play the first data.

17. The method according to claim 16, wherein the first message is used to trigger the application processor to switch to a non-sleep state.

18. The method according to any one of claims 14 to 17, wherein the first information comprises a first audio format of the first audio, and that the microcontroller unit determines, based on the first information, that the microcontroller unit supports playing of the first audio specifically comprises:
when determining, based on the first audio format, that the microcontroller unit supports decoding of the first audio in the first audio format, determining, by the microcontroller unit, that the microcontroller unit supports playing of the first audio.

19. The method according to claim 18, wherein the controlling, by the microcontroller unit, the speaker to play the first audio specifically comprises:
decoding, by the microcontroller unit, the first audio to obtain the first data; and
controlling, by the microcontroller unit, the speaker to play the first data.

20. The method according to any one of claims 14 to 19, wherein the first information comprises an identifier of the first audio, and that the microcontroller unit determines, based on the first information, that the microcontroller unit supports playing of the first audio specifically comprises:
when determining, based on the identifier of the first audio, that a second audio corresponding to the identifier of the first audio is stored, determining, by the microcontroller unit, that the microcontroller unit supports playing of the first audio.

21. The method according to claim 20, wherein the second audio comprises the first data obtained through decoding, and the controlling, by the microcontroller unit, the speaker to play the first audio specifically comprises:
controlling, by the microcontroller unit, the speaker to play the second audio indicated by the identifier of the first audio.

22. The method according to claim 20, wherein the second audio comprises the first data encoded in a second audio format, the microcontroller unit supports decoding of the second audio in the second audio format, and the controlling, by the microcontroller unit, the speaker to play the first audio specifically comprises:
decoding, by the microcontroller unit, the second audio indicated by the identifier of the first audio, to obtain the first data; and
controlling, by the microcontroller unit, the speaker to play the first data.

23. The method according to any one of claims 17 to 22, wherein when the microcontroller unit controls the speaker to play an audio, the method further comprises:
detecting, by the application processor, a first request of a second application, wherein the first request is used to request use of the speaker; and
sending, by the application processor, a sixth message to the microcontroller unit, wherein the sixth message indicates the microcontroller unit to stop playing the audio.

24. The method according to claim 23, wherein a priority of the second application is higher than a priority of the first application.

25. The method according to any one of claims 17 to 24, wherein in a process of playing the audio by the microcontroller unit, the method further comprises:
receiving, by the application processor, an input for volume adjustment, and setting a volume value of the application processor to an adjusted volume value;
sending, by the application processor, the adjusted volume value to the microcontroller unit; and
setting, by the microcontroller unit, a volume value of the microcontroller unit to the adjusted volume value.

26. The method according to any one of claims 17 to 25, wherein the electronic device is in a state of continuously playing audios and the microcontroller unit determines, based on the first information, that the microcontroller unit supports playing of the first audio; and the method further comprises:
after the microcontroller unit completes playing of the first audio, if the microcontroller unit determines, based on second information of a third audio, that playing of the third audio is not supported, notifying, by the microcontroller unit, the application processor to switch to the non-sleep state, and sending the third audio to the application processor; and
after switching to the non-sleep state, decoding, by the application processor, the third audio.

27. A processing method, comprising:
receiving, by the first electronic device, a first input, wherein the first input is used to trigger the electronic device to play a first audio by using a first application;
sending, by the first electronic device, a first message to a second electronic device in response to the first input, wherein the first message indicates the second electronic device to determine whether the second electronic device supports playing of the first audio; and
switching, by the first electronic device, to a sleep state after receiving a second message sent by the second electronic device.

28. A processing method, comprising:
after receiving a first message sent by a first electronic device, determining, by a second electronic device, whether the second electronic device supports playing of the first audio;
when the second electronic device determines, based on the first message, that the second electronic device supports playing of the first audio, sending, by the second electronic device, a second message to the first electronic device; and
controlling, by the second electronic device, the speaker to play the first audio after the second electronic device sends the second message to the first electronic device.

29. A processing method, comprising:
receiving, by the second electronic device, a first input, wherein the first input is used to trigger the electronic device to play a first audio by using a first application;
determining, by the second electronic device in response to the first input based on first information of the first audio, whether the second electronic device supports playing of the first audio; and
when the second electronic device determines, based on the first information, that the second electronic device supports playing of the first audio, controlling, by the second electronic device, the speaker to play the first audio.

30. A processing method, comprising:
receiving, by a first electronic device, a first message sent by a second electronic device, wherein the first message comprises a first audio;
decoding, by the first electronic device, the first audio to obtain first data; and
sending, by the first electronic device, the first data to the second electronic device, wherein the first data is played by the second electronic device through the speaker.

31. An electronic device, comprising one or more processors and one or more memories, wherein the one or more processors comprise an application processor and a microcontroller unit, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13 or 14 to 26.

32. A computer-readable storage medium, comprising instructions, wherein when the instructions are run on an electronic device, the electronic device is enabled to perform the method according to any one of claims 1 to 13, 14 to 26, 27, 28, 29, or 30.

33. A chip system, wherein the chip system is applied to an electronic device, the chip system comprises one or more processors, the one or more processors comprise an application processor and a microcontroller unit, and the processor is configured to invoke computer instructions to enable the electronic device to perform the method according to any one of claims 1 to 13 or 14 to 26.

34. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claim 27, 28, 29, or 30.

35. A chip system, wherein the chip system is applied to an electronic device, the chip system comprises one or more processors, and the processor is configured to invoke computer instructions to enable the electronic device to perform the method according to any one of claim 27, 28, 29, or 30.
